(19) **Europäisches Patentamt** / **European Patent Office** / **Office européen des brevets**

(11) **EP 4 446 992 A1**

(12) # EUROPEAN PATENT APPLICATION
published in accordance with Art. 153(4) EPC

(43) Date of publication:
**16.10.2024 Bulletin 2024/42**

(21) Application number: **22903888.0**

(22) Date of filing: **24.10.2022**

(51) International Patent Classification (IPC):
**G06T 9/00** (2006.01)

(52) Cooperative Patent Classification (CPC):
**G06T 9/00**

(86) International application number:
**PCT/JP2022/039448**

(87) International publication number:
**WO 2023/105954 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2021 US 202163287624 P**

(71) Applicant: **Panasonic Intellectual Property Corporation of America**
**Torrance, CA 90504 (US)**

(72) Inventors:
- **NISHI, Takahiro**
  **Kadoma-shi, Osaka 571-0057 (JP)**
- **SUGIO, Toshiyasu**
  **Kadoma-shi, Osaka 571-0057 (JP)**
- **IGUCHI, Noritaka**
  **Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **THREE-DIMENSIONAL DATA ENCODING METHOD, THREE-DIMENSIONAL DATA DECODING METHOD, THREE-DIMENSIONAL DATA ENCODING DEVICE, AND THREE-DIMENSIONAL DATA DECODING DEVICE**

(57) A three-dimensional data encoding method includes: correcting position information of one or more first three-dimensional points to be matched to a coordinate system of a current three-dimensional point to be encoded, to generate a first reference point cloud (S201); selecting one of the first reference point cloud or a second reference point cloud as a third reference point cloud for the current three-dimensional point (S202), the second reference point cloud including the one or more first three-dimensional points uncorrected; determining a prediction point using the third reference point cloud (S203); and encoding position information of the current three-dimensional point by reference to at least part of position information of the prediction point (S204).

FIG. 15

Start

S201
Correct position information of first three-dimensional points to be matched to coordinate system of current three-dimensional point, to generate first reference point cloud

S202
Select one of first reference point cloud and second reference point cloud including first three-dimensional points uncorrected as third reference point cloud for current three-dimensional point

S203
Determine prediction point using third reference point cloud

S204
Encode position information of current three-dimensional point by reference to position information of prediction point

End

EP 4 446 992 A1

**Description**

[Technical Field]

The present disclosure relates to a three-dimensional data encoding method, a three-dimensional data decoding method, a three-dimensional data encoding device, and a three-dimensional data decoding device.

[Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

[Citation List]

[Patent Literature]

[PTL 1] International Publication WO 2014/020663

[Summary of Invention]

[Technical Problem]

There has been a demand for improving coding efficiency in a three-dimensional data encoding process and a three-dimensional data decoding process.

The present disclosure has an object to provide a three-dimensional data encoding method, a three-dimensional data decoding method, a three-dimensional data encoding device, and a three-dimensional data decoding device that are capable of improving coding efficiency.

[Solution to Problem]

A three-dimensional data encoding method according to one aspect of the present disclosure is (the recitation of claim 1 will be pasted before filing. The same applies hereinafter.).

A three-dimensional data decoding method according to one aspect of the present disclosure is (claim 12).

[Advantageous Effects of Invention]

The present disclosure provides a three-dimensional data encoding method, a three-dimensional data decoding method, a three-dimensional data encoding device, and a three-dimensional data decoding device that are capable of improving coding efficiency.

[Brief Description of Drawings]

[FIG. 1]

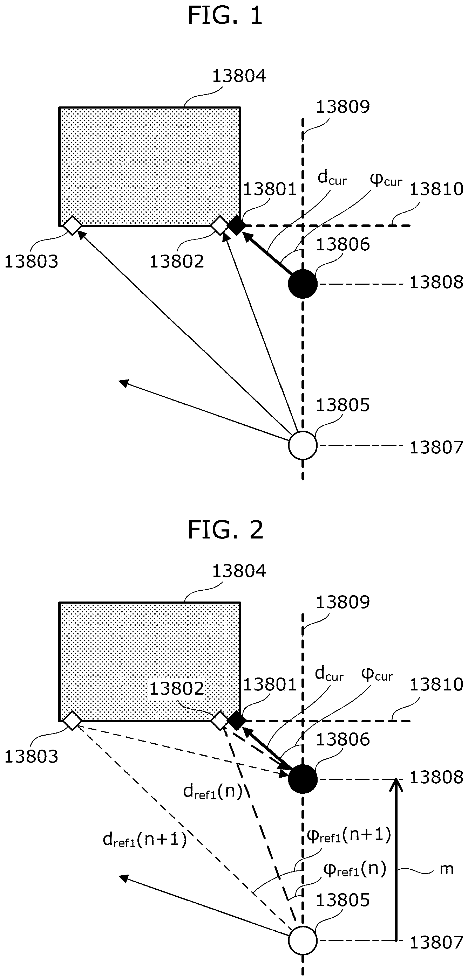

FIG. 1 is a diagram for describing a method of encoding or decoding a three-dimensional point represented in a polar coordinate system using inter prediction according to Embodiment 1.

[FIG. 2]

FIG. 2 is a diagram for describing the method of encoding or decoding a three-dimensional point represented in a polar coordinate system using inter prediction according to Embodiment 1.

[FIG. 3]

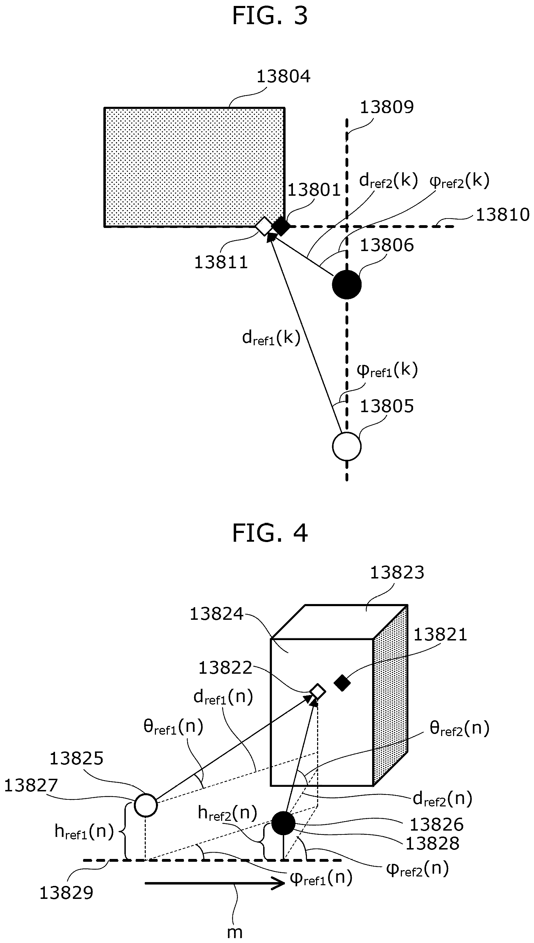

FIG. 3 is a diagram for describing the method of encoding or decoding a three-dimensional point represented in a polar coordinate system using inter prediction according to Embodiment 1.

[FIG. 4]

FIG. 4 is a diagram for describing the method of encoding or decoding a three-dimensional point represented in a polar coordinate system using inter prediction according to Embodiment 1.

[FIG. 5]

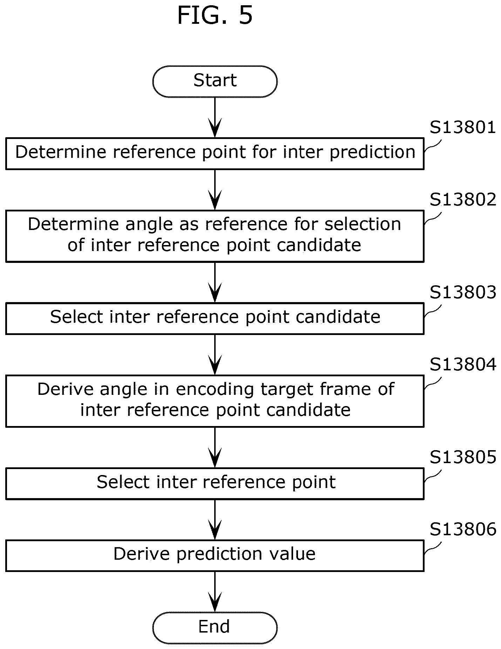

FIG. 5 is a flowchart illustrating an example of a processing procedure of an inter prediction method according to Embodiment 1.

[FIG. 6]

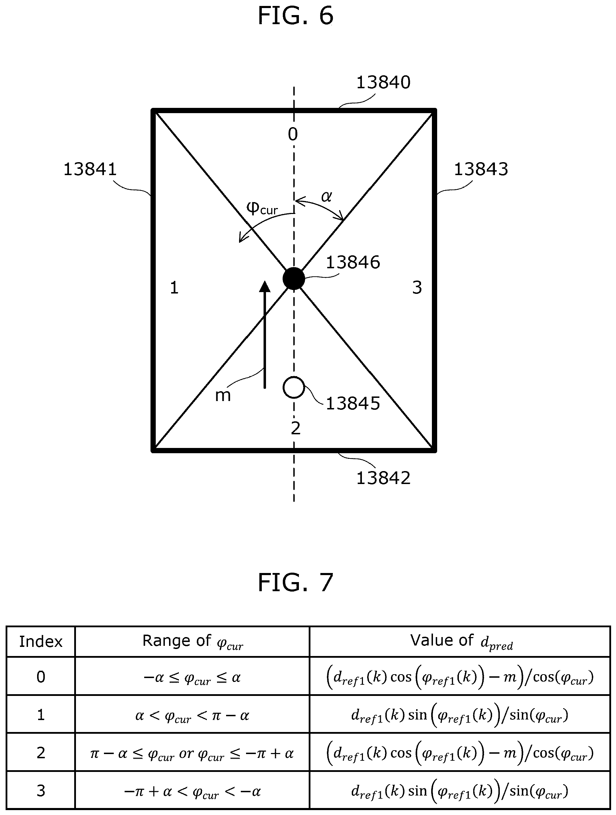

FIG. 6 is a diagram for describing a first example in which a method of deriving a prediction value is changed according to a value of a horizontal angle according to Embodiment 1.

[FIG. 7]

FIG. 7 is a diagram illustrating formulas for deriving prediction value $d_{pred}$ defined for four directions according to horizontal angle $\varphi_{cur}$ according to Embodiment 1.

[FIG. 8]

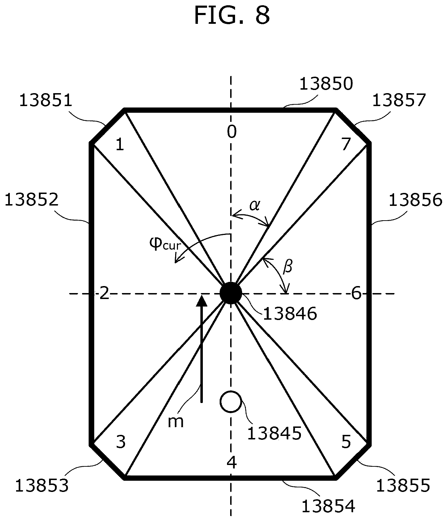

FIG. 8 is a diagram for describing a second example in which a method of deriving a prediction value is changed according to a value of a horizontal angle according to Embodiment 1.

[FIG. 9]

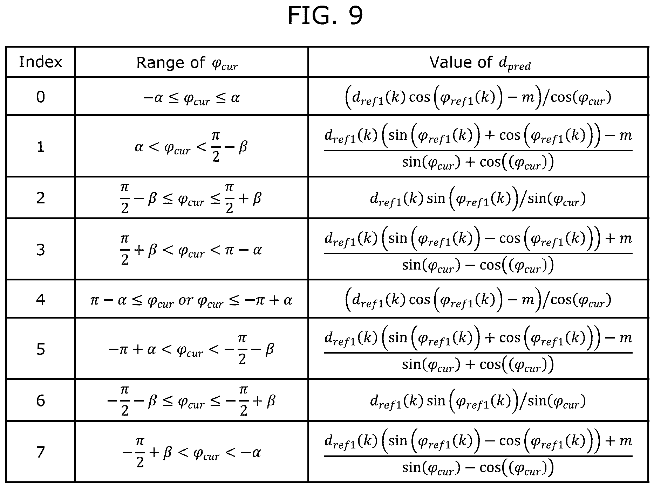

FIG. 9 is a diagram illustrating formulas for deriving prediction value $d_{pred}$ defined for eight directions according to horizontal angle $\varphi_{cur}$ according to Embodiment 1.

[FIG. 10]

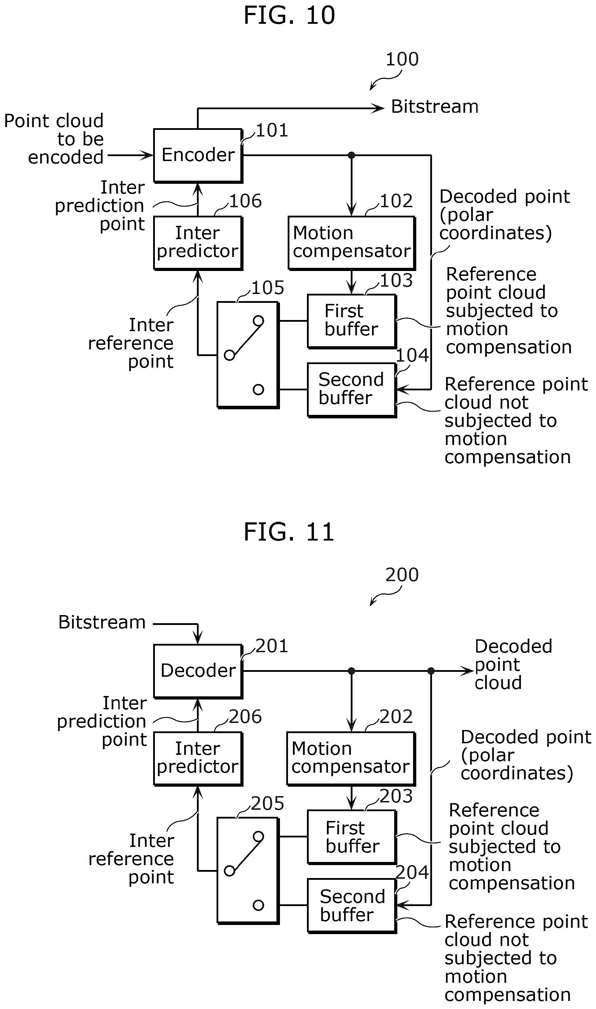

FIG. 10 is a block diagram of a three-dimensional data encoding device according to Embodiment 2.

[FIG. 11]

FIG. 11 is a block diagram of a three-dimensional data decoding device according to Embodiment 2.

[FIG. 12]

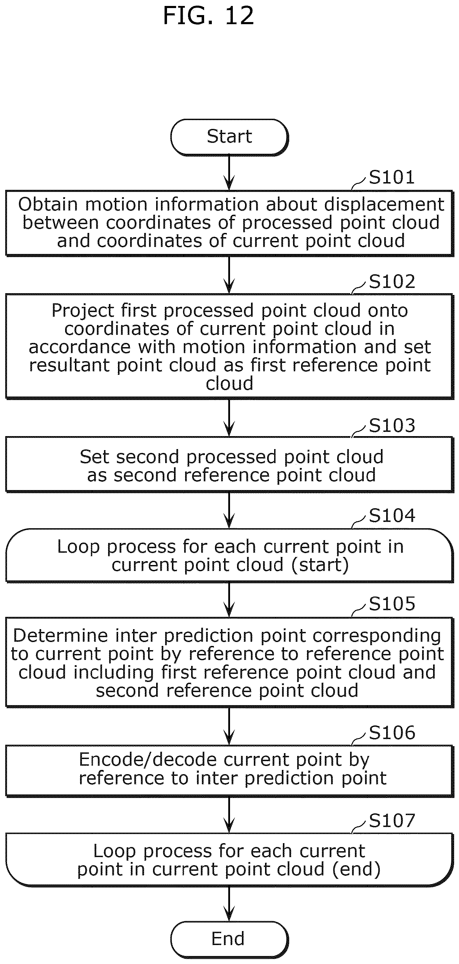

FIG. 12 is a flowchart of an encoding or decoding process including an inter prediction process according to Embodiment 2.

[FIG. 13]

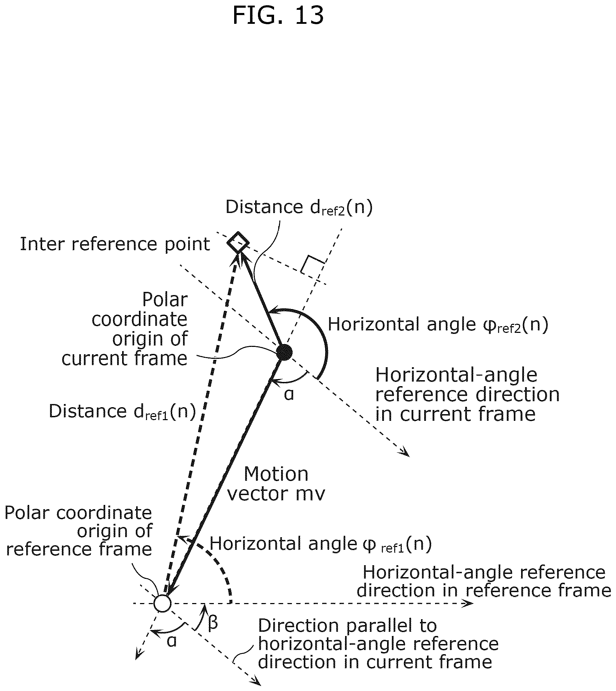

FIG. 13 is a diagram for describing an example of an inter prediction method according to Embodiment 2.

[FIG. 14]

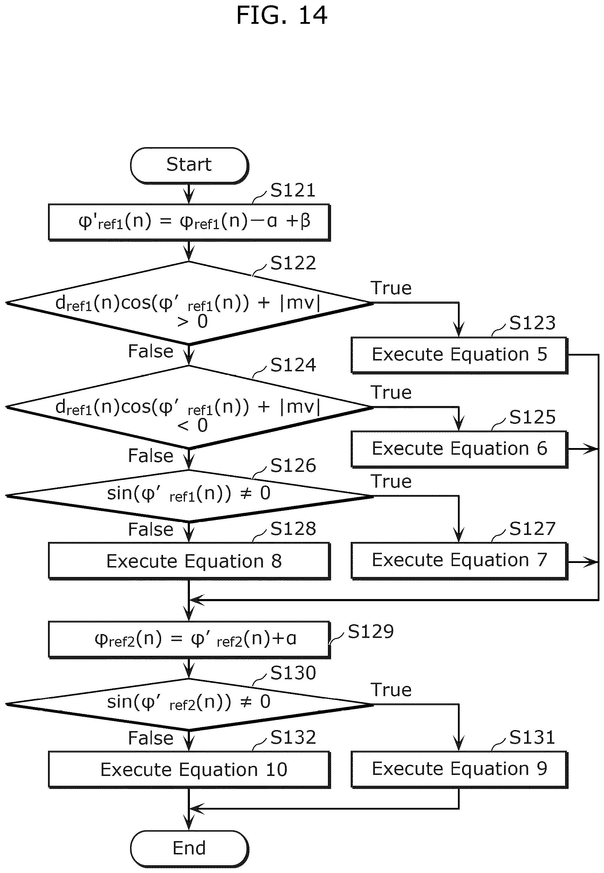

FIG. 14 is a flowchart of the inter prediction process according to Embodiment 2.

[FIG. 15]

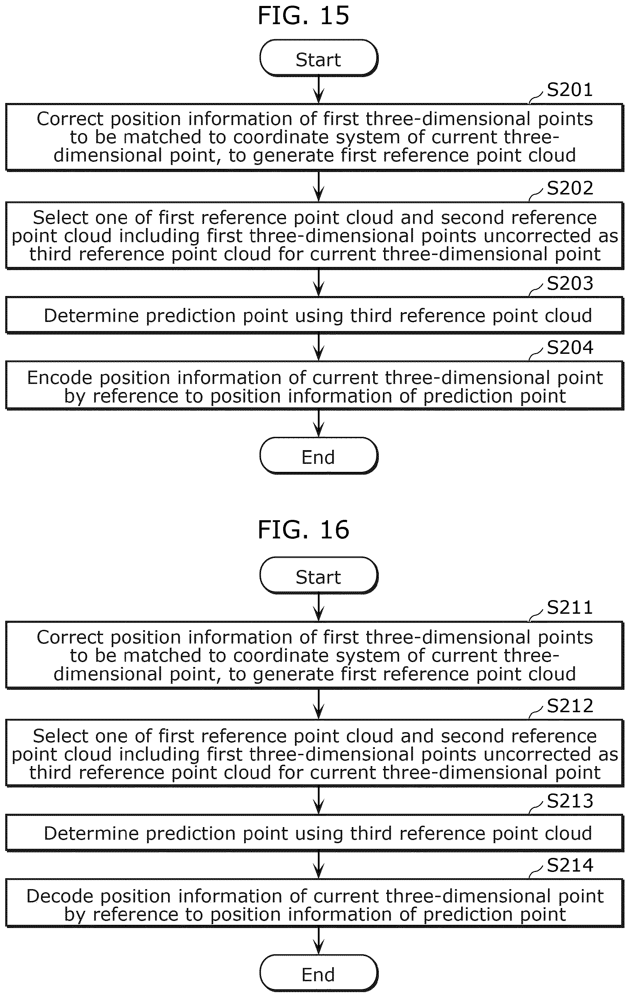

FIG. 15 is a flowchart of a three-dimensional data encoding process according to Embodiment 2.

[FIG. 16]

FIG. 16 is a flowchart of a three-dimensional data decoding process according to Embodiment 2.

[Description of Embodiments]

A three-dimensional data encoding method according to one aspect of the present disclosure includes: correcting position information of one or more first three-dimensional points to be matched to a coordinate system of a current three-dimensional point to be encoded, to generate a first reference point cloud; selecting one of the first reference point cloud or a second reference point cloud as a third reference point cloud for the current three-dimensional point, the second reference point cloud including the one or more first three-dimensional points uncorrected; determining a prediction point using the third reference point cloud; and encoding position information of the current three-dimensional point by reference to at least part of position information of the prediction point.

Accordingly, the three-dimensional data encoding method selectively uses the first reference point cloud corrected and the second reference point cloud uncorrected, to encode a current point. Therefore, with the three-dimensional data encoding method, it may be possible to determine a prediction point that gives a small prediction error. Therefore, the three-dimensional data encoding method can improve a coding efficiency. In addition, the three-dimensional data encoding method can curb an amount of data handled in the encoding process.

For example, in the correcting, the position information of the one or more first three-dimensional points may be matched to a coordinate system of the current three-dimensional point, based on first information indicating a displacement between a coordinate system of the one or more first three-dimensional points and the coordinate system of the current three-dimensional point.

For example, in the correcting, the one or more first three-dimensional points may be projected onto a coordinate origin of the current three-dimensional point in accordance with the displacement, to derive position information of one or more second three-dimensional points included in the first reference point cloud.

For example, the first information may include at least one of second information about a movement parallel to a horizontal plane or third information about a rotation around a vertical axis.

For example, the position information of the one or more three-dimensional points may include a distance component, a horizontal angle component, and an elevation angle component, and in the correcting, at least one of the distance component or the horizontal angle component may be corrected. That is, in this aspect, elevation angle components in sets of polar coordinates are not corrected. Therefore, this aspect is suitable for a case of selectively using the reference point cloud having a position corrected in the horizontal direction and the reference point cloud uncorrected. For example, this aspect is suitable for a three-dimensional point cloud obtained by a sensor that alternates between moving in the horizontal direction and stopping.

For example, the three-dimensional data encoding method may further include: determining whether to perform the correcting; and generating a bitstream including the position information of the current three-dimensional point encoded and fourth information indicating whether to perform the correcting.

Accordingly, the three-dimensional data encoding method can determine a prediction point that gives a small prediction error, by switching whether to perform the correction.

For example, when the correcting is not performed, the second reference point cloud may be selected as the third reference point cloud.

For example, the one or more first three-dimensional points may be included in a first processing unit, and when the correcting is not performed, one of the second reference point cloud or a fourth reference point cloud may be selected as the third reference point cloud, the fourth reference point cloud being one or more third three-dimensional points that are included in a second processing unit different from the first processing unit and are uncorrected.

Accordingly, when the correction is not performed, the three-dimensional data encoding method can refer to two processing units that are not subjected to the correction. Therefore, the three-dimensional data encoding method can improve a coding efficiency.

For example, one or more fourth three-dimensional points that are part of the one or more first three-dimensional points may be corrected to generate the first reference point cloud.

Accordingly, the three-dimensional data encoding method can reduce a processing load by limiting three-dimensional points to be corrected. For example, in a case where a relative positional relationship between a current three-dimensional point and the origin is substantially equal to a relative positional relationship between a prediction point included in the reference point cloud and the origin, a prediction error can be curbed by using the prediction point rather than performing the correction. On the other hand, in a case where a relative positional relationship between a current three-dimensional point and the origin is different from a relative positional relationship between a prediction point included in the reference point cloud and the origin, a prediction error can be curbed by using the prediction point subjected to the correction. In this manner, it is possible to make a prediction error small by switching whether to perform the correction in accordance with a position of a current three-dimensional point.

For example, the position information of the one or more three-dimensional points may include a distance component, a horizontal angle component, and an elevation angle component, and the one or more fourth three-dimensional points may be one or more first three-dimensional points each having an elevation angle component greater than a predetermined value among the one or more first three-dimensional points. That is, in this aspect, three-dimensional points to be corrected are limited to three-dimensional points having large elevation angle components. Three-dimensional points having large elevation angle components express, for example, a building. Buildings are fixed to the ground. Therefore, in a case where a current three-dimensional point and a prediction point are each one of points expressing a building, a relative positional relationship between the current three-dimensional point and the origin is different from a relative positional relationship between the prediction point included in the reference point cloud and the origin. In this case, it is possible to curb a prediction error by using a prediction point subjected to the correction. For this reason, for the three-dimensional data encoding method, objects to be subjected to the correction are limited to buildings and the like.

Likewise, the one or more fourth three-dimensional points may be one or more first three-dimensional points each having a vertical position higher than a predetermined position among the one or more first three-dimensional points.

A three-dimensional data decoding method according to one aspect of the present disclosure includes: correcting position information of one or more first three-dimensional points to be matched to a coordinate system of a current three-dimensional point to be decoded, to generate a first reference point cloud; selecting one of the first reference point cloud or a second reference point cloud as a third reference point cloud for the current three-dimensional point, the second reference point cloud including the one or more first three-dimensional points uncorrected; determining a prediction point using the third reference point cloud; and decoding position information of the current three-dimensional point by reference to at least part of position information of the prediction point.

Accordingly, the three-dimensional data decoding method selectively uses the first reference point cloud corrected and the second reference point cloud uncorrected, to decode a current point. Therefore, with the three-dimensional data decoding method, it may be possible to determine a prediction point that gives a small prediction error. Therefore, the three-dimensional data decoding method can curb an amount of data handled in the decoding process.

For example, in the correcting, the position information of the one or more first three-dimensional points may be matched to a coordinate system of the current three-dimensional point, based on first information indicating a displacement between a coordinate system of the one or more first three-dimensional points and the coordinate system of the current three-dimensional point.

For example, in the correcting, the one or more first three-dimensional points may be projected onto a coordinate origin of the current three-dimensional point in accordance with the displacement, to derive position information of one or more second three-dimensional points included in the first reference point cloud.

For example, the first information may include at least one of second information about a movement parallel to a horizontal plane or third information about a rotation around a vertical axis.

For example, the position information of the one or more three-dimensional points may include a distance component, a horizontal angle component, and an elevation angle component, and in the correcting, at least one of the distance component or the horizontal angle component may be corrected. That is, in this aspect, elevation angle components in sets of polar coordinates are not corrected. Therefore, this aspect is suitable for a case of selectively using the reference point cloud having a position corrected in the horizontal direction and the reference point cloud uncorrected. For example, this aspect is suitable for a three-dimensional point cloud obtained by a sensor that alternates between moving in the horizontal direction and stopping.

For example, the three-dimensional data decoding method may further include: obtaining, from a bitstream, fourth information indicating whether to perform the correcting; and determining whether to perform the correcting, based on the fourth information.

Accordingly, the three-dimensional data decoding method can determine a prediction point that gives a small prediction error, by switching whether to perform the correction.

For example, when the correcting is not performed, the second reference point cloud may be selected as the third reference point cloud.

For example, the one or more first three-dimensional points may be included in a first processing unit, and when the correcting is not performed, one of the second reference point cloud or a fourth reference point cloud may be selected as the third reference point cloud, the fourth reference point cloud being one or more third three-dimensional points that are included in a second processing unit different from the first processing unit and are uncorrected.

Accordingly, when the correction is not performed, the three-dimensional data decoding method can refer to two processing units that are not subjected to the correction. Therefore, the three-dimensional data decoding method can improve a coding efficiency.

For example, one or more fourth three-dimensional points that are part of the one or more first three-dimensional points may be corrected to generate the first reference point cloud.

Accordingly, the three-dimensional data decoding method can reduce a processing load by limiting three-dimensional points to be corrected. For example, in a case where a relative positional relationship between a current three-dimensional point and the origin is substantially equal to a relative positional relationship between a prediction point included in the reference point cloud and the origin, a prediction error can be curbed by using the prediction point rather than performing the correction. On the other hand, in a case where a relative positional relationship between a current three-dimensional point and the origin is different from a relative positional relationship between a prediction point included in the reference point cloud and the origin, a prediction error can be curbed by using the prediction point subjected to the correction. In this manner, it is possible to make a prediction error small by switching whether to perform the correction in accordance with a position of a current three-dimensional point.

For example, the position information of the one or more three-dimensional points may include a distance component, a horizontal angle component, and an elevation angle component, and the one or more fourth three-dimensional points may be one or more first three-dimensional points each having an elevation angle component greater than a predetermined value among the one or more first three-dimensional points. That is, in this aspect, three-dimensional points to be corrected are limited to three-dimensional points having large elevation angle components. Three-dimensional points having large elevation angle components express, for example, a building. Buildings are fixed to the ground. Therefore, in a case where a current three-dimensional point and a prediction point are each one of points expressing a building, a relative positional relationship between the current three-dimensional point and the origin is different from a relative positional relationship between the prediction point included in the reference point cloud and the origin. In this case, it is possible to curb a prediction error by using a prediction point subjected to the correction. For this reason, for the three-dimensional data decoding method, objects to be subjected to the correction are limited to buildings and the like.

Likewise, the one or more fourth three-dimensional points may be one or more first three-dimensional points each having a vertical position higher than a predetermined position among the one or more first three-dimensional points.

A three-dimensional data encoding device according to one aspect of the present disclosure includes: a processor; and memory. Using the memory, the processor: corrects position information of one or more first three-dimensional points to be matched to a coordinate system of a current three-dimensional point to be encoded, to generate a first reference point cloud; selects one of the first reference point cloud or a second reference point cloud as a third reference point cloud for the current three-dimensional point, the second reference point cloud including the one or more first three-dimensional points uncorrected; determines a prediction point using the third reference point cloud; and encodes position information of the current three-dimensional point by reference to at least part of position information of the prediction point.

Accordingly, the three-dimensional data encoding device selectively uses the first reference point cloud corrected, and the second reference point cloud uncorrected, to encode a current point. Therefore, with the three-dimensional data encoding device, it may be possible to determine a prediction point that gives a small prediction error. Therefore, the three-dimensional data encoding device can improve a coding efficiency. In addition, the three-dimensional data encoding device can curb an amount of data handled in the encoding process.

A three-dimensional data decoding device according to one aspect of the present disclosure includes: a processor; and memory. Using the memory, the processor: corrects position information of one or more first three-dimensional points to be matched to a coordinate system of a current three-dimensional point to be decoded, to generate a first reference point cloud; selects one of the first reference point cloud or a second reference point cloud as a third reference point cloud for the current three-dimensional point, the second reference point cloud including the one or more first three-dimensional points uncorrected; determines a prediction point using the third reference point cloud; and decodes position information of the current three-dimensional point by reference to at least part of position information of the prediction point.

Accordingly, the three-dimensional data decoding device selectively uses the first reference point cloud corrected and the second reference point cloud uncorrected, to decode a current point. Therefore, with the three-dimensional data decoding device, it may be possible to determine a prediction point that gives a small prediction error. Therefore, the three-dimensional data decoding device can curb an amount of data handled in the decoding process.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicates a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims which indicate the broadest concepts will be described as optional constituent elements.

[Embodiment 1]

In this embodiment, a three-dimensional data encoding method and a three-dimensional data decoding method will be described in which inter prediction is performed on a point cloud including a plurality of three-dimensional points whose position information is represented in a polar coordinate system, the position information of each three-dimensional point indicating the position of the three-dimensional point. Note that the position information may also be referred to simply as a position. In the following, a method of determining one or more candidate points used for determination of a prediction value of the inter prediction will be mainly described.

FIGS. 1 to 3 are diagrams for describing a method of encoding or decoding, through inter prediction, a three-dimensional point represented in a polar coordinate system.

Here, the inter prediction is a method of encoding a plurality of encoding target three-dimensional points included in an encoding target frame by referring to one or more three-dimensional points already encoded included in a reference frame, which is a different frame than the encoding target frame, and prediction-encoding the plurality of three-dimensional points included in the encoding target frame based on the one or more three-dimensional points referred to. The intra prediction is a method of encoding a plurality of encoding target three-dimensional points included in an encoding target frame by referring to at least one of one or more other three-dimensional points already encoded included in the encoding target frame and prediction-encoding the plurality of three-dimensional points included in the encoding target frame based on the one or more three-dimensional points referred to. The encoding target frame may also be referred to as a second frame. The reference frame may also be referred to as a first frame.

Point cloud data has one or more frames, each of which has one or more three-dimensional points. The one or more frames include an encoding target frame and a reference frame. For example, each frame may be generated through measurement at a plurality of positions with a sensor. Each frame may also be generated through measurement with a plurality of different sensors.

A plurality of first three-dimensional points are obtained by measuring distances from a first position to objects in a plurality of first directions in a space on a reference plane. The first position is a first origin that is a reference for the position information of the plurality of first three-dimensional points, which is a result of measurement from a sensor disposed at a third position. The first position may also be referred to as a first reference position. The first position may or may not agree with the third position at which the sensor is disposed. Each of the plurality of first three-dimensional points is represented in a first polar coordinate system having the first position as the first origin. The plurality of first three-dimensional points are included in the reference frame, for example.

A plurality of second three-dimensional points are obtained by measuring distances from a second position to objects in a plurality of second directions in the space on the reference plane. The second position is a second origin that is a reference for the position information of the plurality of second three-dimensional points, which is a result of measurement from a sensor disposed at a fourth position. The second position may also be referred to as a second reference position. The second position may or may not agree with the fourth position at which the sensor is disposed. Each of the plurality of second three-dimensional points is represented in a second polar coordinate system having the second position as the second origin.

The sensor generates a measurement result including one or more three-dimensional points by emitting an electromagnetic wave and receiving a reflection wave from a subject, which is the electromagnetic wave reflected by the subject. In this embodiment, the sensor may generate one frame including a measurement result obtained by one measurement. Specifically, the sensor measures the time required for the emitted electromagnetic wave to return to the sensor after being reflected by a subject around the sensor, and calculates the distance between the sensor and a point on the surface of the subject based on the measured time and the wavelength of the electromagnetic wave. The sensor emits an electromagnetic wave in a plurality of predetermined radial directions from a reference position of the sensor. The sensor is LiDAR, for example, and the electromagnetic wave is laser light, for example.

Each three-dimensional point has at least position information. The position information indicates the position of the three-dimensional point that has the position information, and is represented by polar coordinates. Specifically, the position information includes the distance between the reference point and the three-dimensional point that has the position information and two angles indicating the direction from the reference point to the three-dimensional point that has the position information. One of the two angles is an angle (horizontal angle) formed between the above-described direction and a reference direction that is perpendicular to an axis perpendicular to the reference plane viewed along the axis, and the other angle is an angle (elevation angle) formed between the above-described direction and the reference plane. Note that the reference plane is a horizontal plane, such as a plane, a ground surface or a floor surface to which a predetermined axis of the sensor, such as the axis of rotation of LiDAR, is perpendicular, or a plane that is parallel to such an axis.

In FIGS. 1 to 3, it is assumed that, as with LiDAR, a point cloud centered at a sensor position generated by obtaining three-dimensional positions of objects around a sensor is encoded. For example, FIGS. 1 to 3 show positional relationships between second reference position 13808 of sensor 13806 at the time of measurement of a point cloud in an encoding target frame, first reference position 13807 of sensor 13805 at the time of measurement a point cloud in a reference frame, encoding target point 13801, and reference candidate points 13802 and 13803 for inter prediction. Provided that the sensor is a LiDAR sensor or the like that measures distances to objects by emitting laser light while rotating about a predetermined axis (axis of rotation), FIGS. 1 to 3 are plan views viewed in the direction of the axis. Encoding target point 13801 and reference candidate points 13802 and 13803 indicate three-dimensional positions on the same surface (planar surface, for example) 13810 of object 13804. Encoding target point 13801 is included in the point cloud in the encoding target frame. Points in the point cloud in the encoding target frame are shown as black rhombi in FIGS. 1 to 3. Reference candidate points 13802 and 13803 are included in the point cloud in the reference frame, and included in a plurality of (n+1, for example) three-dimensional points that indicate the three-dimensional position of plane 13810. Points in the point cloud in the reference frame are shown as white rhombi in FIGS. 1 to 3. Note that sensor 13805 and sensor 13806 may be the same sensor or may be different sensors (that is, separate sensors). When sensor 13805 and sensor 13806 are the same sensor, it means that one sensor moves from first reference position 13807 to second reference position 13808 or from second reference position 13808 to first reference position 13807. In this case, the time at which the encoding target frame is generated and the time at which the reference frame is generated are different. When sensor 13805 and sensor 13806 are different sensors, the time at which the encoding target frame is generated and the time at which the reference frame is generated may be different or the same.

The three-dimensional data encoding device determines prediction value $d_{pred}$ of distance $d_{cur}$ from second reference position 13808 of sensor 13806 to encoding target point 13801 based on the positional relationship between second reference position 13808 of sensor 13806 at the time of measurement of the point cloud in the encoding target frame, first reference position 13807 of sensor 13805 at the time of measurement of the point cloud in the reference frame, encoding target point 13801, and reference candidate points 13802 and 13803. The three-dimensional data encoding device may use determined prediction value $d_{pred}$ for inter prediction. For example, the three-dimensional data encoding device may determine prediction value $d_{pred}$ by performing steps 1 to 3 described below. Note that the three-dimensional data decoding device determines prediction value $d_{pred}$ by the same process as that performed by the three-dimensional data encoding device, so that only the three-dimensional data encoding device will be described in the following.

In step 1, as illustrated in FIG. 2, the three-dimensional data encoding device projects at least one reference candidate points 13802 and 13803 onto the second polar coordinate system of second reference position 13808, and derives horizontal angle $\varphi_{ref2}(i)$ of an i-th reference candidate point viewed from second reference position 13808 according to equation Z1. Note that $\varphi_{ref1}(i)$, $d_{ref1}(i)$, and m denote a horizontal angle at first reference position 13807, a distance between first reference position 13807 and the i-th reference candidate point, and a distance (distance between sensors or distance of movement) between first reference position 13807 and second reference position 13808, respectively, illustrated in FIG. 2. Note that the horizontal angle is an angle of the direction from first reference position 13807 to the i-th reference candidate point with respect to reference direction 13809, which is a direction connecting first reference point 13807 and second reference position 13808. n denotes a natural number that can assume i and k. i denotes any natural number.

$$\varphi_{ref2}(i) = \arctan(d_{ref1}(i)\sin(\varphi_{ref1}(i))/(d_{ref1}(i)\cos(\varphi_{ref1}(i)) - m))$$

$$(\text{Equation Z1})$$

In step 2, the three-dimensional data encoding device selects horizontal angle $\varphi_{ref2}(k)$ close to horizontal angle $\varphi_{cur}$ pointing encoding target point 13801 from second reference position 13808 from among at least one horizontal angle $\varphi_{ref2}(i)$ corresponding to the i-th reference candidate point, and selects k-th reference candidate point 13802 pointed by horizontal angle $\varphi_{ref2}(k)$ as reference point (inter reference point) 18311 used for inter prediction, as illustrated in FIG. 3. Note that k denotes a natural number that indicates, among n horizontal angles $\varphi_{ref2}$, a horizontal angle close to horizontal angle $\varphi_{cur}$ pointing encoding target point 13801 from second reference position 13808. That is, the k-th reference candidate point is a reference point used for calculation of a prediction value among n reference candidate points, and is an example of the first three-dimensional point already encoded.

In step 3, the three-dimensional data encoding device derives distance $d_{ref2}(k)$ from second reference position 13808 to inter reference point 13811, and determines distance $d_{ref2}(k)$ as prediction value $d_{pred}$.

$$d_{pred} = d_{ref2}(k) = d_{ref1}(k)\sin(\varphi_{ref1}(k))/\sin(\varphi_{ref2}(k)) \quad (\text{Equation Z2})$$

The point cloud in the encoding target frame and the point cloud in the reference frame are represented by polar coordinates in coordinate systems having different reference positions. Therefore, when prediction-encoding encoding target point 13801 using reference candidate points 13802 and 13803 in the reference frame, which is different from the encoding target frame, a coordinate system conversion need to be performed to convert the coordinate system of reference candidate points 13802 and 13803 in the reference frame from the first coordinate system, in which the point cloud in the reference frame is represented, into the second coordinate system, in which the point cloud in the encoding target frame is represented.

By performing steps 1 to 3, the three-dimensional data encoding device determines a first three-dimensional point that is already encoded whose position is represented in the first polar coordinate system. The first three-dimensional point is a reference point used for a prediction value. In order to calculate a prediction value of distance $d_{cur}$ from second reference position 13808 that is yet to be encoded whose position is represented in the second polar coordinate system, the three-dimensional data encoding device determines (i) distance m between first reference position 13807 and second reference position 13808, (ii) horizontal angle $\varphi_{ref1}(k)$ formed between a first line connecting first reference position 13807 and second reference position 13808 and a second line connecting first reference position 13807 and reference point 13811, and (iii) distance $d_{ref1}(k)$ of reference point 13811 in the first polar coordinate system from first reference position 13807. Note that distance $d_{cur}$ is an example of a second distance. Distance m is an example of the distance between the first position and the second position. Horizontal angle $\varphi_{ref1}(k)$ is an example of a first angle, and indicates the angle formed between the first line and the second line. Distance $d_{ref1}(k)$ is an example of a first distance.

In order to calculate a prediction value of the position of the second three-dimensional point yet to be encoded in the second polar coordinate system, for example, the three-dimensional data encoding device calculates (iv) horizonal angle formed between the first line and a third line connecting second reference position 13808 and reference point 13811, and (v) distance $d_{cur}$ of reference point 13811 in the second polar coordinate system from second reference position 13808, from distance m, horizontal angle $\varphi_{ref1}(k)$, and distance $d_{ref1}(k)$. Note that horizontal angle $\varphi_{ref2}(k)$ is an example of a second angle.

In the calculation of distance $d_{cur}$, for example, when the first line and the reference line for the horizontal angle in the first polar coordinate system are aligned (that is, when the first line and the reference line for the horizontal angle are parallel), horizontal angle $\varphi_{ref2}(k)$ is calculated from distance $d_{ref1}(k)$ and horizontal angle $\varphi_{ref1}(k)$ as the first angle. Horizontal angle $\varphi_{ref1}(k)$ is an example of a first horizontal angle, and is a horizontal angle component of the polar coordinate components representing the position of reference point 13811. The position of reference point 13811 is represented in the first polar coordinate system. Note that, although the examples in FIGS. 1 to 3 show cases where the first line and the reference line for the horizontal angle in the first polar coordinate system are aligned (that is, when the first line and the reference line for the horizontal angle are parallel), when the first line and the reference line for the horizontal angle in the first polar coordinate system are not aligned (that is, when the first line and the reference line for the horizontal angle are not parallel), the three-dimensional data encoding device may calculate, as the first angle, the difference between the horizontal angle component of the polar coordinate components representing the position of reference point 13811 and the angle of the first line with respect to the reference line.

Note that when determining reference point 13811, the three-dimensional data encoding device may determine the first three-dimensional point based on another second three-dimensional point already encoded whose position is represented in the second polar coordinate system.

In this way, the three-dimensional data encoding device can precisely predict distance $d_{cur}$ from second reference position 13808 in the encoding target frame to encoding target point 13801, and there is a possibility that the efficiency of the inter prediction encoding can be improved.

Note that distance m of movement may be generated based on a result of measurement with GPS (Global Positioning System) or a sensor, such as an odometer, or a result derived with a self-localization technique using SfM (Structure from Motion), SLAM (Simultaneous Localization and Mapping) or the like. These results may be included in header information of a predetermined data unit, such as a frame or a slice, or information of a leading node of such a data unit. In this way, the three-dimensional data encoding device may notify the three-dimensional data encoding device of these results.

In step 3 described above, $d_{ref2}(k)$ may be derived according to equation Z3.

$$d_{ref2}(k) = (d_{ref1}(k)\cos(\varphi_{ref1}(k)) - m)/\cos(\varphi_{ref2}(k)) \quad \text{(Equation Z3)}$$

The three-dimensional data encoding device may determine the inter reference point by projecting all reference candidate points in the reference frame onto the second polar coordinate system of second reference position 13808 in the encoding target frame. That is, the three-dimensional data encoding device may perform the coordinate system conversion described above on all reference candidate points in the reference frame and determine the inter reference point based on all the converted candidate points. Alternatively, the three-dimensional data encoding device may limit the reference candidate points to points included in a certain range of the horizontal angle with respect to sensor 13805 for the reference frame based on horizontal angle $\varphi_{cur}$ of encoding target point 13801, distance m between first reference position 13807 and second reference position 13808 or the like. For example, when horizontal angle $\varphi_{cur}$ of encoding target point 13801 is small, or when the encoding target point lies in the direction connecting the first reference position and the second reference position, the processing of determining the inter reference point is not performed. When distance m is large, the reference candidate points are limited to those in an area situated forward of the first reference position in the direction from the first reference position to the second reference position. In this way, the processing amount of the processing of determining the inter reference point can be reduced. That is, the three-dimensional data encoding device can reduce the processing amount involved with the coordinate system conversion by limiting the reference candidate points that are to be subjected to the coordinate system conversion to some of all the reference candidate points based on horizontal angle $\varphi_{cur}$, distance m or the like.

Arithmetic processing, such as trigonometric function or division, in each of the steps described above may be simplified by using a table containing a finite number of elements. Such simplification can improve the efficiency of the inter prediction encoding while reducing the processing amount.

Note that the angle formed between reference direction 13809 and the same surface (planar surface, for example) 13810 of object 13804 in FIGS. 1 to 3 is not limited. That is, the direction of the first line connecting first reference position 13807 and second reference position 13808 can be at any angle with respect to the horizontal axis included in the same surface (planar surface, for example) 13810 of object 13804. In this case, of course, the prediction value can be calculated in the method described above.

Next, in FIG. 4, it is assumed that, as with LiDAR, a point cloud centered at a sensor position generated by obtaining three-dimensional positions of objects around a sensor is encoded. For example, in FIG. 4, in steps 1 to 3 described with reference to FIGS. 1 to 3, the three-dimensional data encoding device may determine prediction value $d_{pred}$ of distance $d_{cur}$ from sensor 13826 in the encoding target frame to encoding target point 13821 by additionally considering elevation angle $\theta_{cur}$ of encoding target point 13821 with respect to sensor 13826 in the encoding target frame.

FIG. 4 illustrates a positional relationship between second reference position 13828 of sensor 13826 in the encoding target frame, first reference position 13827 of sensor 13825 in the reference frame, encoding target point 13821, and reference candidate point 13822 for the inter prediction. Encoding target point 13821 and reference candidate point 13822 indicate three-dimensional positions on the same surface (planar surface, for example) 13824 of object 13823. Encoding target point 13821 is included in the point cloud in the encoding target frame. Points in the point cloud in the encoding target frame are shown as black rhombi in FIG. 4. Reference candidate point 13822 is a three-dimensional point that is included in the point cloud in the reference frame and indicates a three-dimensional position on surface 13824 of object 13823. The reference frame includes one or more three-dimensional points, and may include a plurality of (n, for example) three-dimensional points. Points in the point cloud in the reference frame are shown as white rhombi in FIG. 4. Note that sensor 13825 and sensor 13826 may be the same sensor or may be different sensors (that is, separate sensors). When sensor 13825 and sensor 13826 are the same sensor, it means that one sensor moves from first reference position 13827 to second reference position 13828 or from second reference position 13828 to first reference position 13827. In this case, the time at which the encoding target frame is generated and the time at which the reference frame is generated are different. When sensor 13825 and sensor 13826 are different sensors, the time at which the encoding target frame is generated and the time at which the reference frame is generated may be different or the same.

The three-dimensional data encoding device may determine prediction value $d_{pred}$ by performing steps 11 to 13 described below.

In step 11, the three-dimensional data encoding device projects at least one reference candidate points 13822 onto the second polar coordinate system of second reference position 13828, and derives horizontal angle $\varphi_{ref2}(i)$ and elevation angle $\theta_{ref2}(i)$ of an i-th reference candidate point viewed from second reference position 13828 according to equations Z4 and Z5. Note that $\varphi_{ref2}(i)$, $\theta_{ref2}(i)$, $d_{ref1}(i)$, and m denote a horizontal angle and an elevation angle at first reference position 13827, a distance between the first reference position and the i-th reference candidate point, and a distance (distance between sensors or distance of movement) between first reference position 13827 and second reference position 13828, respectively, illustrated in FIG. 4. Note that the horizontal angle is an angle of the direction of the i-th reference candidate point from first reference position 13827 with respect to reference direction 13829, which is a direction connecting first reference position 13827 and second reference position 13828. The elevation angle is an angle of the direction of the i-th reference candidate point from first reference position 13827 with respect to the horizontal plane. n denotes a natural number that can assume i and k. i denotes any natural number.

$$\varphi_{ref2}(i) = \arctan(d_{ref1}(i)\sin(\varphi_{ref1}(i))/(d_{ref1}(i)\cos(\varphi_{ref1}(i)) - m))$$

(Equation Z4)

$$\theta_{ref2}(i) = \arctan((\tan(\theta_{ref1}(i))/d_{ref1}(i)) \times \sin(\phi_{ref2}(i))/\sin(\phi_{ref1}(i))) \qquad \text{(Equation Z5)}$$

Note that, in equation Z5, $h_{ref1}(i)$ denotes a height of sensor 13825 from the reference plane, and $h_{ref2}(i)$ denotes a height of sensor 13826 from the reference plane.

In step 12, the three-dimensional data encoding device selects a set of horizontal angle $\varphi_{ref2}(k)$ and elevation angle $\theta_{ref2}(k)$ close to a set of horizontal angle $\varphi_{cur}$ and elevation angle $\theta_{cur}$ pointing encoding target point 13821 from second reference position 13828 from among at least one set of horizontal angle $\varphi_{ref2}(i)$ and elevation angle $\theta_{ref2}(i)$ corresponding to reference candidate point 13822, and selects k-th reference candidate point 13822 pointed by the set of horizontal angle $\varphi_{ref2}(k)$ and elevation angle $\theta_{ref2}(k)$ as a reference point (inter reference point) used for inter prediction. Note that k denotes a natural number that indicates, among n sets of horizontal angles $\varphi_{ref2}$ and elevation angle $\theta_{ref2}$, a set of horizontal angle $\varphi_{ref2}(k)$ and elevation angle $\theta_{ref2}(k)$ close to horizontal angle $\varphi_{cur}$ and elevation angle $\theta_{cur}$ pointing encoding target point 13821 from second reference position 13828. That is, the k-th reference candidate point is a reference point used for calculation of a prediction value among n reference candidate points, and is an example of the first three-dimensional point already encoded.

In step 13, the three-dimensional data encoding device derives distance $d_{ref2}(k)$ from second reference position 13828 to reference candidate point 13822 selected as an inter reference point, and determines distance $d_{ref2}(k)$ as prediction value $d_{pred}$.

$$d_{pred} = d_{ref2}(k) = d_{ref1}(k)\sin(\varphi_{ref1}(k))/\sin(\varphi_{ref2}(k)) \quad \text{(Equation Z6)}$$

In this way, the three-dimensional data encoding device can precisely predict distance $d_{cur}$ from sensor 13826 in the encoding target frame to encoding target point 13821, and there is a possibility that the efficiency of the inter prediction encoding can be improved.

Note that in step 13 described above, $d_{ref2}(k)$ may be derived according to equation Z7.

$$d_{ref2}(k) = (d_{ref1}(k)\cos(\varphi_{ref1}(k)) - m)/\cos(\varphi_{ref2}(k)) \quad \text{(Equation Z7)}$$

The three-dimensional data encoding device may determine the inter reference point by projecting all reference candidate points in the reference frame onto the second polar coordinate system of second reference position 13828 in the encoding target frame. That is, the three-dimensional data encoding device may project all reference candidate points in the reference frame onto the second polar coordinate system of the second reference position and determine the inter reference point based on all the converted candidate points. Alternatively, the three-dimensional data encoding device may limit the reference candidate points to points included in a certain range of the horizontal angle and the elevation angle with respect to sensor 13825 for the reference frame based on horizontal angle $\varphi_{cur}$ or elevation angle $\theta_{cur}$ of encoding target point 13821, distance m between first reference position 13827 and second reference position 13828 or the like. In this way, the processing amount of the processing of determining the inter reference point can be reduced. That is, the three-dimensional data encoding device can reduce the processing amount involved with the coordinate system conversion by limiting the reference candidate points that are to be subjected to the coordinate system conversion to some of all the reference candidate points based on horizontal angle $\varphi_{cur}$, elevation angle $\theta_{cur}$, distance m and the like.

Arithmetic processing, such as trigonometric function or division, in each of the steps described above may be simplified by using a table containing a finite number of elements. Furthermore, in step 11, $\theta_{ref2}(i)$ may be determined according to equation Z8, provided that $(h_{ref1}(i) - h_{ref2}(i))/d_{ref1}(i)$ is sufficiently small. Such simplification can improve the efficiency of the inter prediction encoding while reducing the processing amount.

$$\theta_{ref2}(i) = \arctan(\tan(\theta_{ref1}(i))\sin(\varphi_{ref2}(i))/\sin(\varphi_{ref1}(i))) \quad \text{(Equation Z8)}$$

FIG. 5 is a flowchart illustrating an example of a processing procedure of an inter prediction method.

In the encoding target frame, the three-dimensional data encoding device determines an intra prediction point $(d_{intra}, \varphi_{intra}, \theta_{intra})$ as a reference point for the inter prediction (S13801). Note that a prediction value may be used which is determined in a prediction method that is determined to be an appropriate intra prediction method through notification of intra prediction information, or the prediction method may be limited to particular prediction methods to omit notification of some or all intra prediction information. Here, the intra prediction point determined as a reference point for the inter prediction may be a three-dimensional point used for calculation of the prediction value of the encoding target three-dimensional point in the second polar coordinate system.

The three-dimensional data encoding device then projects the intra prediction point $(d_{intra}, \varphi_{intra}, \theta_{intra})$ onto the first polar coordinate system of the reference frame, and determines angles $(\varphi_{sref}, \theta_{sref})$ as a reference for selection of a reference candidate point in the reference frame (S13802). Note that the angles $(\varphi_{sref}, \theta_{sref})$ may be determined according to equations Z9 and Z10.

$$\varphi_{sref} = \arctan(d_{intra}\sin(\varphi_{intra})/(d_{intra}\cos(\varphi_{intra}) + m)) \quad \text{(Equation Z9)}$$

$$\theta_{sref} = \arctan(\tan(\theta_{intra})\sin(\varphi_{sref})/\sin(\varphi_{intra})) \quad \text{(Equation Z10)}$$

The three-dimensional data encoding device then selects, as a reference candidate point, one or more three-dimensional points having angles ($\varphi_{ref1}(i)$, $\theta_{ref1}(i)$) close to the angles ($\varphi_{sref}$, $\theta_{sref}$) in the reference frame in a predetermined manner (S13803). Note that the three-dimensional data encoding device may select one or more laser scan lines having an elevation angle close to elevation angle $\theta_{sref}$, select one or more three-dimensional points having a horizontal angle close to horizontal angle $\varphi_{sref}$ in each laser scan line in order of proximity to elevation angle $\theta_{sref}$, and designate the order of selection of the points as the indices of the reference candidate points.

The three-dimensional data encoding device then projects the reference candidate point ($d_{ref1}(i)$, $\varphi_{ref1}(i)$, $\theta_{ref1}(i)$) onto the second polar coordinate system of the second reference position in the encoding target frame, and derives angles ($\varphi_{ref2}(i)$, $\theta_{ref2}(i)$) in the encoding target frame (S13804). Note that the angles ($\varphi_{ref2}(i)$, $\theta_{ref2}(i)$) may be derived according to equations Z11 and Z12.

$$\varphi_{ref2}(i) = \arctan(d_{ref1}(i)\sin(\varphi_{ref1}(i))/(d_{ref1}(i)\cos(\varphi_{ref1}(i)) - m))$$

(Equation Z11)

$$\theta_{ref2}(i) = \arctan(\tan(\theta_{ref1}(i))\sin(\varphi_{ref2}(i))/\sin(\varphi_{ref1}(i)))$$

(Equation Z12)

The three-dimensional data encoding device then selects an inter reference point ($\varphi_{ref2}(k)$, $\theta_{ref2}(k)$) from among the angles ($\varphi_{ref2}(i)$, $\theta_{ref2}(i)$) in a predetermined manner (S13805). Note that the three-dimensional data encoding device may select, as the inter reference point, a reference candidate point having the closest angles to the angles ($\varphi_{cur}$, $\theta_{cur}$). In this way, the inter reference point is determined based on the angle components of the polar coordinate components representing the positions of the other second three-dimensional points included in the encoding target frame. Among the plurality of first three-dimensional points including the other first three-dimensional points already encoded whose positions are represented in the first polar coordinate system, the inter reference point is a first three-dimensional point whose angle components after the projection from the first polar coordinate system onto the second polar coordinate system are the closest to the angle components of the encoding target point. Alternatively, the three-dimensional data encoding device may notify the three-dimensional data decoding device of the index k of the inter reference point selected in a predetermined manner.

The three-dimensional data encoding device then derives distance $d_{ref2}(k)$ from the first reference position in the encoding target frame to the inter reference point, and determines distance $d_{ref2}(k)$ as prediction value $d_{pred}$ (S13806). Note that distance $d_{ref2}(k)$ may be derived according to any of equations Z13 and Z14.

$$d_{ref2}(k) = d_{ref1}(k)\sin(\varphi_{ref1}(k))/\sin(\varphi_{ref2}(k)) \quad \text{(Equation Z13)}$$

$$d_{ref2}(k) = (d_{ref1}(k)\cos(\varphi_{ref1}(k)) - m)/\cos(\varphi_{ref2}(k)) \quad \text{(Equation Z14)}$$

Note that since the inter reference point itself is used as a prediction value, and no distance corresponding to $\varphi_{cur}$ is calculated, equations Z13 and Z14 give the same value of distance $d_{ref2}(k)$.

In this way, the three-dimensional data encoding device may project an intra prediction point in the encoding target frame onto the first polar coordinate system of the first reference position in the reference frame, and select one or more inter reference candidate points based on the angles of the point. In this way, the number of the reference candidate points used for the inter prediction can be reduced, and the processing amount of the inter prediction can be reduced. Arithmetic processing, such as trigonometric function or division, in the steps described above may be simplified by using a table containing a finite number of elements.

In this way, there is a possibility that the efficiency of the inter prediction encoding can be improved while reducing the processing amount.

Note that the arithmetic operation or determination concerning elevation $\theta$ may be omitted, and the arithmetic operation or determination using only horizontal angle $\varphi$ may be performed. The inter prediction according to this embodiment may be replaced with an intra prediction on a node or slice basis, or replaced with an intra prediction or another inter prediction on a node or slice basis.

In the inter prediction method described with reference to FIGS. 2 to 5, distance $d_{ref2}(k)$ is derived and determined as prediction value $d_{pred}$. However, as illustrated in FIG. 6, the method of deriving prediction value $d_{pred}$ may be changed according to the value of $\varphi_{cur}$. FIG. 6 is a diagram for describing a first example in which the method of deriving the prediction value is changed according to the value of the horizontal angle. FIG. 6 is a plan view of a sensor measuring the distance to an object by emitting laser light while rotating about a predetermined axis (axis of rotation), as with a LiDAR sensor, viewed in the direction of the axis. FIG. 7 is a diagram illustrating formulas for deriving prediction value $d_{pred}$ defined for four directions according to horizontal angle $\varphi_{cur}$. Index in FIG. 7 indicates index values 0 to 3 corresponding to virtual plane 13840 to 13843 set in FIG. 6, respectively.

As illustrated in FIG. 6, virtual planes perpendicular to the horizontal plane (reference plane) are set as target objects in four, front, rear, left, and right, directions, and prediction value $d_{pred}$ is derived for each of four ranges based on horizontal angle $\varphi_{cur}$ according to the formulas illustrated in FIG. 7. That is, the three-dimensional data encoding device obtains the horizontal angle $\varphi_{cur}$ of the encoding target point, and derives prediction value $d_{pred}$ according to the formula illustrated in FIG. 9 according to horizontal angle $\varphi_{cur}$. Note that in the example in FIG. 6, $|\varphi_{cur}| \leq \pi$, and $0 < \alpha < \pi/2$. $\alpha$ may be a predetermined constant, such as $\alpha = \pi/6$. $\alpha$ may be included in header information of a predetermined data unit, such as sequence, frame, or slice. In this way, the three-dimensional data encoding device may notify the three-dimensional data decoding device of $\alpha$ so that $\alpha$ can be modified. In which range the boundary between two ranges is included need not be as illustrated in FIG. 7, as far as it is consistent in the encoding process and the decoding process.

In this way, the three-dimensional data encoding device may use different prediction value determination methods, a first determination method for a prediction value in prediction encoding of a plurality of three-dimensional points on a first plane and a second determination method for a prediction value in prediction encoding of a plurality of three-dimensional points on a second plane. As described above, the prediction encoding is an inter prediction that prediction-encodes an encoding target point in an encoding target frame using a reference candidate point in a reference frame that is different from the encoding target frame. The first plane is a plane that is perpendicular to the reference plane and faces the first reference position and the second reference position in a third direction. The second plane is a plane that is perpendicular to the reference plane and faces the first reference position and the second reference position in a fourth direction. The third direction and the fourth direction are different directions. Some of the plurality of three-dimensional points on the first plane are included in the plurality of first three-dimensional points included in the reference frame. Some of the plurality of three-dimensional points on the first plane are included in the plurality of first three-dimensional points included in the encoding target frame. Some of the plurality of three-dimensional points on the second plane are included in the plurality of first three-dimensional points included in the reference frame. Some of the plurality of three-dimensional points on the second plane are included in the plurality of second three-dimensional points included in the second frame.

In this way, distance $d_{cur}$ from the second reference position in the encoding target frame to the encoding target point can be precisely predicted based on a point cloud obtained with sensor 13845 in the reference frame at the first reference position distant from the second reference position by distance m in the inter prediction method described with reference to FIGS. 2 to 5, and the efficiency of the inter prediction encoding can be further improved.

Note that arithmetic processing, such as trigonometric function or division, in FIG. 7 may be simplified by using a table containing a finite number of elements. Such simplification can improve the efficiency of the inter prediction encoding while reducing the processing amount.

The four deriving methods for prediction value $d_{pred}$ for the four, front, rear, left, and right, directions described with reference to FIGS. 6 and 7 may be combined with four deriving methods for four diagonal directions, which are between the four directions described above, so that different deriving methods can be used for eight directions as illustrated in FIG. 8. FIG. 8 is a diagram for describing a second example in which the method of deriving the prediction value is changed according to the value of the horizontal angle. FIG. 8 is a plan view of a sensor measuring the distance to an object by emitting laser light while rotating about a predetermined axis (axis of rotation), as with a LiDAR sensor, viewed in the direction of the axis. FIG. 9 is a diagram illustrating formulas for deriving prediction value $d_{pred}$ defined for eight directions according to horizontal angle $\varphi_{cur}$. Index in FIG. 9 indicates index values 0 to 7 corresponding to virtual plane 13840 to 13843 set in FIG. 8, respectively.

As illustrated in FIG. 8, virtual planes perpendicular to the horizontal plane (reference plane) are set as target objects in four, front, rear, left, and right, directions and four diagonal directions between those four directions, and prediction value $d_{pred}$ is derived for each of eight ranges based on horizontal angle $\varphi_{cur}$ according to the formulas illustrated in FIG. 9. That is, the three-dimensional data encoding device obtains horizontal angle $\varphi_{cur}$ of the encoding target point, and derives prediction value $d_{pred}$ according to the formula illustrated in FIG. 9 according to horizontal angle $\varphi_{cur}$. Note that in the example in FIG. 8, $|\varphi_{cur}| \leq \pi$, and $0 < \alpha < \pi/2$, and $0 < \beta < \pi/2 - \alpha$. $\alpha$ and $\beta$ may be predetermined constants, such as $\alpha = \pi/6$ and $\beta = \pi/4$. $\alpha$ and $\beta$ may be included in header information of a predetermined data unit, such as sequence, frame, or slice. In this way, the three-dimensional data encoding device may notify the three-dimensional data decoding device of $\alpha$ and $\beta$ so that $\alpha$ and $\beta$ can be modified. In which range in which the boundary between two ranges is included need not be as illustrated in FIG. 9, as far as it is consistent in the encoding process and the decoding process.

In this way, distance $d_{cur}$ from the second reference position in the encoding target frame to the encoding target point can be precisely predicted based on a point cloud obtained with sensor 13845 in the reference frame at the first reference position distant from sensor 13846 by distance m in the inter prediction method described with reference to FIGS. 2 to 7, and the efficiency of the inter prediction encoding can be further improved.

Note that arithmetic processing, such as trigonometric function or division, in FIG. 9 may be simplified by using a table containing a finite number of elements. There is a possibility that such simplification can improve the efficiency of the inter prediction encoding while reducing the processing amount.

[Embodiment 2]

In the present embodiment, a technique of performing inter prediction of position information of a three-dimensional point included in three-dimensional data will be described.

The three-dimensional data is, for example, point cloud data. A point cloud is an aggregation of a plurality of three-dimensional points and represents a three-dimensional shape of a current object (object). The point cloud data includes position information items and attribute information items of a plurality of three-dimensional points. The position information items indicate three-dimensional positions of the three-dimensional points. Note that the position information items may be also referred to as geometry information items. For example, the position information items are each expressed in a Cartesian coordinate system or a polar coordinate system.

The attribute information items each indicate, for example, a color, a reflectivity, or a normal vector. One three-dimensional point may have one attribute information item or a plurality of attribute information items.

Note that the three-dimensional data is not limited to point cloud data and may be another type of three-dimensional data such as mesh data. Mesh data (also called three-dimensional mesh data) is a data format used in computer graphics (CG). Mesh data includes a group of surface information items that represents a three-dimensional shape of a current object. For example, the mesh data includes point cloud information (e.g., vertex information items). Therefore, the same technique supporting the point cloud data can be applied to the point cloud information.

FIG. 10 is a block diagram illustrating a configuration of a three-dimensional data encoding device according to the present embodiment. Three-dimensional data encoding device 100 supports inter prediction encoding, which encodes a point cloud to be encoded while referring to an encoded point cloud. Three-dimensional data encoding device 100 includes encoder 101, motion compensator 102, first buffer 103, second buffer 104, switcher 105, and inter predictor 106.

Although FIG. 10 illustrates only components relating to inter prediction encoding of position information, three-dimensional data encoding device 100 may include another processing unit relating to encoding position information (e.g., an intra predictor, etc.) or may include, for example, an attribute information encoder that encodes attribute information.

Encoder 101 encodes a current point cloud that is an input point cloud to be encoded, thus generating a bitstream. Specifically, encoder 101 extracts, from the current point cloud, a prediction tree (Predtree) that is a unit for an encoding process and encodes points included in the prediction tree one by one while referring to an inter prediction point. Encoder 101 also outputs decoded points that are reproduced points resultant from decoding the bitstream. These decoded points are used in inter prediction of a subsequent current point cloud (e.g., a current point cloud of a subsequent frame or slice).

Here, position information items on the current point cloud and position information items on the decoded points are expressed in a form of, for example, sets of polar coordinates. Note that position information items on the current point cloud may be expressed in a form of sets of Cartesian coordinates, and encoder 101 may convert the position information items in a form of the sets of Cartesian coordinates into position information items in a form of sets of polar coordinates and encode the converted position information items in a form of the sets of polar coordinates.

Motion compensator 102 performs motion compensation on the decoded points and stores a reference point cloud subjected to the motion compensation (a first reference point cloud) in first buffer 103. For example, motion compensator 102 performs the motion compensation by projecting the position information items on the decoded points onto the sets of polar coordinates of the current point cloud using, for example, the inter prediction method in a polar coordinate system described in Embodiment 1.

The motion compensation refers to correcting the position information items of the decoded points to be matched to a coordinate system of a current three-dimensional point to be encoded. Specifically, the motion compensation may include at least one of a process of matching an origin of a coordinate system of the decoded points to an origin of the coordinate system of the current three-dimensional point and a process of matching axes of the coordinate system of the decoded points to axes of the coordinate system of the current three-dimensional point. The motion compensation may also include a coordinate calculation using a translation vector and a rotation matrix.

The decoded points (a second reference point cloud not subjected to the motion compensation) are stored in second buffer 104. Switcher 105 selects one of the first reference point cloud stored in first buffer 103 and the second reference point cloud stored in second buffer 104 as inter reference points (a third reference point cloud) and outputs the inter reference points to inter predictor 106.

Inter predictor 106 determines the inter prediction point by reference to at least one of sets of inter reference points stored in first buffer 103 and second buffer 104. For example, inter predictor 106 refers to one or more inter reference points the same as or close to a current point in position, from among a plurality of inter reference points included in a reference frame different from a current frame including the current point cloud. Here, the one or more inter reference points being the same as or close to the current point in position are, for example, one or more points each having an elevation angle index and a horizontal angle index that are the same as or close (e.g., values of the indices are greater than or less than by one) to those of the current point. That is, as a method of determining the inter prediction point in inter predictor 106, one three-dimensional point in the reference point cloud may be selected as the prediction point, or the prediction point may be calculated from a plurality of three-dimensional points in the reference point cloud. For example, an average position of the plurality of three-dimensional points may be calculated as a position of the prediction point.

FIG. 11 is a block diagram illustrating a configuration of a three-dimensional data decoding device according to the present embodiment. Three-dimensional data decoding device 200 supports inter prediction decoding, which decodes a point cloud to be decoded while referring to a decoded point cloud. Three-dimensional data decoding device 200 includes decoder 201, motion compensator 202, first buffer 203, second buffer 204, switcher 205, and inter predictor 206.

Although FIG. 11 illustrates only components relating to inter prediction decoding of position information, three-dimensional data decoding device 200 may include another processing unit relating to decoding position information (e.g., an intra predictor, etc.) or may include, for example, an attribute information decoder that decodes attribute information.

Decoder 201 decodes an input bitstream, thus generating a decoded point cloud. Specifically, decoder 201 decodes each point in a prediction tree while referring to an inter prediction point and outputs the resultant decoded point. Note that operations of motion compensator 202, first buffer 203, second buffer 204, switcher 205, and inter predictor 206 are the same as operations of motion compensator 102, first buffer 103, second buffer 104, switcher 105, and inter predictor 106 included in three-dimensional data encoding device 100 illustrated in FIG. 10, respectively.

As seen above, by using the first reference point cloud subjected to the motion compensation in the inter prediction encoding, it is possible to predict, with high accuracy, position information on structures such as a building and a wall around a movement route such as a road, in encoding a point cloud that a sensor such as a LiDAR sensor obtains during movement. Therefore, it may be possible to improve an efficiency of the inter prediction encoding. Furthermore, by making it possible, in the inter prediction encoding, to refer to both the first reference point cloud subjected to the motion compensation and the second reference point cloud not subjected to the motion compensation, it is possible to increase an accuracy of prediction of not only the position information on structures around a movement route but also position information of points at substantially constant distances from a sensor, such as points of an object that moves at the same speed as the sensor or points of the ground around the sensor. Therefore, it may be possible to further improve the efficiency of the inter prediction encoding.

Next, an example of a processing procedure of an inter prediction process. FIG. 12 is a flowchart illustrating an example of a processing procedure of encoding or decoding a frame to which the inter prediction process is applied, in three-dimensional data encoding device 100 and three-dimensional data decoding device 200 illustrated in FIG. 10 and FIG. 11, respectively. The process illustrated in FIG. 12 may be repeated for each frame or may be repeated for each processing unit to which a frame is divided (e.g., slice).

In this example, three-dimensional data encoding device 100 and three-dimensional data decoding device 200 each first obtain motion information about a displacement between sets of coordinates of a processed point cloud that has been subjected to an encoding or decoding process and sets of coordinates of a current point cloud to be encoded or decoded (S101). For example, three-dimensional data encoding device 100 detects the displacement between the sets of coordinates of the processed point cloud and the sets of coordinates of the current point cloud such as a rotation and/or a translation, using an aligning technique such as Iterative Closest Point (ICP) algorithm and determines the motion information based on the detected displacement. Three-dimensional data encoding device 100 stores the motion information in a higher-level syntax in a bitstream (an SPS, a GPS, or a slice header, etc.).

The SPS (sequence parameter set) is metadata (a parameter set) common to a plurality of frames. The GPS (geometry parameter set) is metadata (a parameter set) relating to encoding position information. For example, the GPS is metadata common to a plurality of frames.

The motion information includes, for example, at least one of information about a movement parallel to a horizontal plane or information about a rotation around a vertical axis. Specifically, the motion information includes, for example, a $3 \times 1$ translation matrix. Alternatively, the motion information includes an absolute value of a translation vector parallel to a horizontal plane ($|mv|$ described later) and a direction (angle $\alpha$ described later). Alternatively, the motion information includes, for example, a 3×3 rotation matrix. Alternatively, the motion information indicates a rotation angle of a coordinate axis on a horizontal plane (angle β described later) and a rotation around a vertical axis.

Three-dimensional data decoding device 200 obtains the motion information from a bitstream and sets, based on the obtained motion information, the displacement between the sets of coordinates of the processed point cloud and the sets of coordinates of the current point cloud such as a rotation and/or a translation.

Next, three-dimensional data encoding device 100 and three-dimensional data decoding device 200 each project at least part of a first processed point cloud onto the sets of coordinates of the current point cloud in accordance with the motion information and set the resultant point cloud as the first reference point cloud (S102). Note that, as a method for projecting the first processed point cloud onto the set of coordinates of the current point cloud, the inter prediction method in a polar coordinate system described with reference to FIG. 1 to FIG. 9 in Embodiment 1 may be used. Here, the first processed point cloud is a processed point cloud included in one frame or one slice. Note that the first processed point cloud may be processed point clouds included in a plurality of frames or a plurality of slices.

Note that the projection may be performed on all of a distance component, a horizontal angle component, and an elevation angle component included in each of position information items or may be performed on one or some of the distance component, the horizontal angle component, and the elevation angle component. For example, only distance components and horizontal angle components may be changed to have values by the projection from the first processed point cloud onto the sets of coordinates of the current point cloud, and elevation angle components may remain unchanged to have values as being in the first processed point cloud. Accordingly, a processing load can be reduced.

Next, three-dimensional data encoding device 100 and three-dimensional data decoding device 200 each set, as the second reference point cloud, at least part of a second processed point cloud on which coordinate information is directly used as coordinate information of the current point cloud (S103). Note that step S103 may be performed prior to step S101 or S102.

Note that the first processed point cloud and the second processed point cloud may be included in the same processing unit (the same frame or the same slice, etc.) or may be included in different processing units. For example, the first processed point cloud and the second processed point cloud may be a point cloud that is a point cloud included in a processing unit and is corrected (projected) and a point cloud that is the point cloud included in the same processing unit and is uncorrected, respectively. For example, the point cloud in the processing unit is a point cloud that is closest in time point to the current point cloud. Alternatively, the second processed point cloud may be a point cloud that is closest in time point to the current point cloud, and the first processed point cloud may be another point cloud that is different in time point from the second processed point cloud.

Using a point cloud at what time point is used for each of the first processed point cloud and the second processed point cloud may be fixedly set in advance. For example, using a point cloud that is closest in time point to the current point cloud for both the first processed point cloud and the second processed point cloud may be fixedly set. Alternatively, three-dimensional data encoding device 100 may determine a point cloud of what time point is to be used as each of the first processed point cloud and the second processed point cloud and store information indicating details of the determination in a higher-level syntax in a bitstream (an SPS, a GPS, or a slice header, etc.). For example, the information is information indicating a temporal distance between the current point cloud and a point cloud to be used as the first processed point cloud and indicating a temporal distance between the current point cloud and a point cloud to be used as the second processed point cloud. In a case where a common point cloud is used for the first processed point cloud and the second processed point cloud, the information may indicate the common point cloud. For example, the information may be set for each processing unit (e.g., a slice or a frame).

Accordingly, three-dimensional data encoding device 100 can select a processed point cloud suitable for characteristics of the current point cloud such as changes over time, and thus it may be possible to improve a coding efficiency.

Next, three-dimensional data encoding device 100 and three-dimensional data decoding device 200 each determine an inter prediction point for each point and encode or decode the current point by reference to the inter prediction point (S104 to S107).

First, three-dimensional data encoding device 100 and three-dimensional data decoding device 200 each start a loop process for each current point included in the current point cloud (S104). That is, one of a plurality of points included in the current point cloud is selected as a current point to be processed.

Next, three-dimensional data encoding device 100 and three-dimensional data decoding device 200 each determine an inter prediction point corresponding to the current point by reference to at least part of the reference point cloud including the first reference point cloud and the second reference point cloud (S105). For example, three-dimensional data encoding device 100 and three-dimensional data decoding device 200 each refer to one or more inter reference points that are the same as or close to the current point in position, from among a plurality of inter reference points included in a reference frame different from a current frame including the current point cloud. Here, the one or more inter reference points being the same as or close to the current point in position are, for example, one or more points each having an elevation angle index and a horizontal angle index that are the same as or close (e.g., values of the indices are greater than or less than by one) to those of the current point.

For example, three-dimensional data encoding device 100 compares a code amount (residual) of a case of using an inter prediction point determined by using the first processed point cloud and a code amount (residual) of a case of using an inter prediction point determined by using the second processed point cloud and determines to select (refers to) an inter prediction point that gives a smaller code amount. Note that the three-dimensional data encoding device 100 may determine an inter prediction point that gives a smallest code amount by reference to the first processed point cloud and the second processed point cloud.

Alternatively, which of the first processed point cloud and the second processed point cloud is to be used may be determined in accordance with, for example, characteristics of the current point or the current point cloud. Three-dimensional data encoding device 100 may store, in a bitstream, information indicating which of the first processed point cloud and the second processed point cloud is to be used or information indicating the inter prediction point, and three-dimensional data decoding device 200 may determine which of the first processed point cloud and the second processed point cloud is to be used or may determine the inter prediction point, by reference to the information.

Next, three-dimensional data encoding device 100 encodes the current point by reference to the inter prediction point (S106). Specifically, three-dimensional data encoding device 100 calculates a residual (difference) between position information of the current point and position information of the inter prediction point. Three-dimensional data encoding device 100 performs quantization or entropy encoding on the resultant residual, thus generating encoded position information. Note that one or more residuals of one or more components of a plurality of components of position information (e.g., a distance, an elevation angle, and a horizontal angle) may be calculated, and for the other component or components, its original value or their original values may be directly quantized or subjected to entropy encoded. In addition, three-dimensional data encoding device 100 generates a bitstream including the encoded position information.

Three-dimensional data decoding device 200 decodes the current point by reference to the inter prediction point. Specifically, three-dimensional data decoding device 200 obtains the encoded position information of the current point from the bitstream. Three-dimensional data decoding device 200 performs entropy decoding and inverse quantization on the encoded position information of the current point, thus generating a residual of the current point. Three-dimensional data decoding device 200 adds the residual of the current point to position information of the inter prediction point, thus generating the position information of the current point.

Next, three-dimensional data encoding device 100 and three-dimensional data decoding device 200 each finish the loop process for the current point (S107). That is, steps S105 and S106 are performed on each of the plurality of points included in the current point cloud.

Three-dimensional data encoding device 100 and three-dimensional data decoding device 200 each need not always refer to an inter prediction point to encode or decode a current point. For example, three-dimensional data encoding device 100 may store switch information indicating whether to refer to an inter prediction point in a bitstream for each node or slice. In this case, three-dimensional data decoding device 200 can switch whether to refer to an inter prediction point based on the information. Note that step S105 may be omitted when an inter prediction point is not referred to. By enabling three-dimensional data encoding device 100 to switch whether to refer to an inter prediction point in this manner, three-dimensional data encoding device 100 can select an encoding method suitable for characteristics of the current point cloud such as changes over time, and thus it may be possible to improve a coding efficiency.

Next, an example of an inter prediction method in a polar coordinate system will be described. FIG. 13 is a diagram for describing an example of an inter prediction method in a case of performing encoding or decoding using polar coordinates. In motion compensator 102 illustrated in FIG. 10 and motion compensator 202 illustrated in FIG. 11, or in step S102 illustrated in FIG. 12, an inter prediction method described below may be used instead of the inter prediction method in a polar coordinate system described in Embodiment 1. That is, FIG. 13 illustrates an example of motion compensation.

In FIG. 13, motion vector mv is a displacement on a horizontal plane from a polar coordinate origin of a current frame (frame to be processed), which is a current frame to be subjected to an encoding or decoding process, to a polar coordinate origin of a reference frame. Angle $\alpha$ is an angle of motion vector mv with respect to a horizontal-angle reference direction in the current frame. Angle $\beta$ is an angle of a horizontal-angle reference direction in the reference frame with respect to the horizontal-angle reference direction in the current frame.

At this time, when a point n in the reference frame is used in the inter prediction in encoding the current frame, three-dimensional data encoding device 100 and three-dimensional data decoding device 200 may determine predicted value $\varphi_{ref2}(n)$ of a horizontal angle and predicted value $d_{ref2}(n)$ of a distance in a set of polar coordinates in the current frame, using (Equation 1) and (Equation 2) shown below. Note that |mv| is a magnitude of motion vector mv.

$$\phi_{ref2}(i) = \arctan(d_{ref1}(n)\sin(\phi_{ref1}(n) - \alpha + \beta)/(d_{ref1}(n)\cos(\phi_{ref1}(n) - \alpha + \beta) + |mv|)) + \alpha \qquad \text{(Equation 1)}$$

$$d_{ref2}(n) = d_{ref1}(n)\sin(\varphi_{ref1}(n) - \alpha + \beta)/\sin(\varphi_{ref2}(n) - \alpha)$$
(Equation 2)

Note that three-dimensional data encoding device 100 and three-dimensional data decoding device 200 may determine $d_{ref2}(n)$ using (Equation 3) shown below instead of (Equation 2). When a denominator of the division in one of (Equation 2) and (Equation 3) is zero, three-dimensional data encoding device 100 and three-dimensional data decoding device 200 may use the other to determine $d_{ref2}(n)$.

$$d_{ref2}(n) = (d_{ref1}(n)\cos(\phi_{ref1}(n) - \alpha + \beta) + |mv|)/\cos(\phi_{ref2}(n) - \alpha)$$
(Equation 3)

The above method enables three-dimensional data encoding device 100 and three-dimensional data decoding device 200 to predict a distance from the polar coordinate origin of the current frame to the current point with high accuracy. Accordingly, it may be possible to improve an efficiency of the inter prediction encoding.

Note that predicted value $\theta_{ref2}(n)$ of an elevation angle in a set of polar coordinates in the current frame may be determined using (Equation Z5) shown in Embodiment 1. Accordingly, it may be possible to further improve the efficiency of the inter prediction encoding. Alternatively, elevation angle $\theta_{ref1}(n)$ in a set of polar coordinates in the reference frame or index information on elevation angle $\theta_{ref1}(n)$ may be directly used as predicted value $\theta_{ref2}(n)$ of the elevation angle or index information on predicted value $\theta_{ref2}(n)$. Accordingly, it may be possible to improve the efficiency of the inter prediction encoding while curbing a processing load.

Note that a method in which atan2(y, x) in the C language, which can derive an angle in the second quadrant or the third quadrant as well, is used instead of arctan in (Equation 1) may be used. For example, (Equation 4) shown below, in which atan2(y, x) in the C language is used, may be used instead of (Equation 1).

$$\phi_{ref2}(n) = atan(d_{ref1}(n)\sin(\phi_{ref1}(n) - \alpha + \beta),(d_{ref1}(n)\cos(\phi_{ref1}(n) - \alpha + \beta) + |mv|)) + \alpha$$
(Equation 4)

Note that atan2(0, 0) is undefined. Therefore, in this case, a constant may be set for atan2(0, 0), such as atan2(0, 0) = 0.

Motion vector mv and angle $\beta$ of the horizontal-angle reference direction in the reference frame with respect to the horizontal-angle reference direction in the current frame may be determined based on a result of derivative using at least one of (1) a result of measurement using a sensor such as a global positioning system (GPS) sensor or an odometer, (2) a localization technique using Structure from Motion (SfM), Simultaneous Localization and Mapping (SLAM), or the like, and (3) an aligning technique such as Iterative Closest Point (ICP) algorithm.

Three-dimensional data encoding device 100 may store, as the motion information, motion vector mv and angle $\beta$ of the horizontal-angle reference direction in the reference frame with respect to the horizontal-angle reference direction in the current frame, or information about their values, in header information in a unit such as a frame or a slice. Three-dimensional data encoding device 100 may store, instead of motion vector mv, magnitude $|mv|$ of mv and angle $\alpha$ of mv with respect to the horizontal-angle reference direction in the current frame in the header information.

FIG. 14 is a flowchart of the inter prediction process. FIG. 14 is also an example of a procedure of deriving predicted value $\varphi_{ref2}(n)$ of a horizontal angle and predicted value $d_{ref2}(n)$ of a distance in a set of polar coordinates in the current frame in the inter prediction method described with reference to FIG. 13. Note that the horizontal angle takes a value in the range of $-\pi$ to $\pi$ in this example. For example, in steps S121 and S129 illustrated in FIG. 14, when a result is less than $-\pi$, $2\pi$ is added to the result, and when the result is greater than $\pi$, $2\pi$ is subtracted from the result.

An operation of three-dimensional data encoding device 100 will be described below, and the operation holds true for an operation of three-dimensional data decoding device 200.

In this procedure, three-dimensional data encoding device 100 first sets $\varphi_{ref1}(n) - \alpha +$ as $\varphi'_{ref1}(n)$ (S121).

Next, three-dimensional data encoding device 100 determines which of angle regions $\varphi'_{ref2}(n)$ satisfying $\varphi'_{ref2}(n) = \varphi_{ref2}(n) - \alpha$ falls into, and derives $\varphi'_{ref2}(n)$ using any one of (Equation 5) to (Equation 8) shown below.

$$\phi'_{ref2}(n) = arctan(d_{ref1}(n)\sin(\phi'_{ref1}(n))/(d_{ref1}(n)\cos(\phi'_{ref1}(n) + |mv|)) + \alpha$$
(Equation 5)

$$\phi'_{ref2}(n) = arctan(d_{ref1}(n)\sin(\phi'_{ref1}(n)/(d_{ref1}(n)\cos(\phi'_{ref1}(n)) + |mv|)) + sign(\phi'_{ref1}(n)) + \pi$$
6)

$$\varphi'_{ref2}(n) = sign(\varphi'_{ref1}(n)) \times \pi/2 \quad \text{(Equation 7)}$$

$$\varphi'_{ref2}(n) = 0 \quad \text{(Equation 8)}$$

Note that sign(x) is such that sign(x) = 1 when x > 0, sign(x) = 0 when x == 0, and sing(x) = -1 when x < 0.

Specifically, when $d_{ref1}(n)cos(\varphi'_{ref1}(n)) + |mv| > 0$ is satisfied (True in S122), three-dimensional data encoding device 100 determines that $-\pi/2 < \varphi'_{ref2}(n) < \pi/2$ is satisfied, and calculates $\varphi'_{ref2}(n)$ by executing (Equation 5) (S123).

When $d_{ref1}(n)cos(\varphi'_{ref1}(n)) + |mv| > 0$ is not satisfied (False in S122) and when $d_{ref1}(n)cos(\varphi'_{ref1}(n)) + |mv| < 0$ is satisfied (True in S124), three-dimensional data encoding device 100 determines that $\varphi'_{ref2}(n) < -\pi/2$ or $\pi/2 < \varphi'_{ref2}(n)$ is satisfied, and calculates $\varphi'_{ref2}(n)$ by executing (Equation 6) (S125).

When $d_{ref1}(n)cos(\varphi'_{ref1}(n)) + |mv| > 0$ is not satisfied (False in S122), when $d_{ref1}(n)cos(\varphi'_{ref1}(n)) + |mv| < 0$ is not satisfied (False in S124), and when $sin(\varphi'_{ref1}(n)) \neq 0$ is satisfied (True in S126), three-dimensional data encoding device 100 determines that $\varphi'_{ref2}(n) = -\pi/2$ or $\varphi'_{ref2}(n) = \pi/2$ is satisfied, and calculates $\varphi'_{ref2}(n)$ by executing (Equation 7) (S127).

When the above three conditions are all False (False in S126), three-dimensional data encoding device 100 determines that tan is not defined, and sets a constant (e.g., zero) to $\varphi'_{ref2}(n)$ by executing (Equation 8) (S128).

Note that, in (Equation 5) and (Equation 6), arctan(x) is defined in the range of $-\pi/2 < x < \pi/2$. In addition, in S123, S125, and S127, ($\varphi'_{ref1}(n) = \varphi_{ref1}(n) - \alpha +$ and (Equation 8) to which $\varphi'_{ref2}(n) = \varphi_{ref2}(n) - \alpha$ is applied may be used instead of (Equation 5) to (Equation 7).

Next, three-dimensional data encoding device 100 uses $\varphi'_{ref2}(n)$ calculated above and sets $\varphi'_{ref2}(n) + \alpha$ as $\varphi_{ref2}(n)$ (S129).

Next, three-dimensional data encoding device 100 determines which of the angle regions $\varphi'_{ref1}(n)$ falls into, and derives $d_{ref2}(n)$ using (Equation 9) or (Equation 10).

$$d_{ref2}(n) = d_{ref1}(n)sin(\varphi'_{ref1}(n))/sin(\varphi'_{ref2}(n)) \quad \text{(Equation 9)}$$

$$d_{ref2}(n) = (d_{ref1}(n)cos(\varphi'_{ref1}(n)) + |mv|)/cos(\varphi'_{ref2}(n)) \quad \text{(Equation 10)}$$

Specifically, when $sin(\varphi'_{ref2}(n))$ is not zero (True in S130), three-dimensional data encoding device 100 determines that a reference point is not positioned on a straight line including motion vector mv, and calculates $d_{ref2}(n)$ by executing (Equation 9) (S131). When $sin(\varphi'_{ref2}(n))$ is zero (False in S130), three-dimensional data encoding device 100 determines that the reference point is positioned on the straight line including motion vector mv, and calculates $d_{ref2}(n)$ by executing (Equation 10) (S132).

Variations will be described below. In the devices, the processes, or the syntax disclosed with reference to FIG. 10 to FIG. 14, in a case where both motion vector mv indicating the displacement on the horizontal plane from the polar coordinate origin of the current frame (frame to be processed) to be subjected to the encoding/decoding process to the polar coordinate origin of the reference frame and the angle formed by the horizontal-angle reference direction in the reference frame with respect to the horizontal-angle reference direction in the current frame are smaller than respective predetermined values (in a case where the movement is small), three-dimensional data encoding device 100 may use, in the inter prediction, only the reference point cloud not subjected to the motion compensation, and may omit storing information accompanying the motion compensation such as information about the selection of the inter reference point in the bitstream. Alternatively, three-dimensional data encoding device 100 and three-dimensional data decoding device 200 may use, instead of the reference point cloud subjected to the motion compensation, a point cloud at another time point that is not subjected to the motion compensation as a reference point cloud. Accordingly, it may be possible, in encoding a scene in which a movable body equipped with the sensor is stopped, to maintain or improve a coding efficiency while curbing a processing load.

Three-dimensional data encoding device 100 may store information indicating whether to use the reference point cloud subjected to the motion compensation in the inter prediction in a higher-level syntax (an SPS, a GPS, or a slice header, etc.). When the reference point cloud subjected to the motion compensation is not used in the inter prediction, three-dimensional data encoding device 100 and three-dimensional data decoding device 200 may use one or more reference point clouds not subjected to the motion compensation in the inter prediction. Accordingly, it may be possible to increase flexibilities in operating three-dimensional data encoding device 100 and designing an encode algorithm, thus improving an operability of the device and a coding efficiency.

Three-dimensional data encoding device 100 and three-dimensional data decoding device 200 may project all inter reference candidate points included in the reference frame onto the polar coordinate origin of the current frame or may project only one or some of the points onto the polar coordinate origin of the current frame. For example, the one or some of the points are points having elevation angles with respect to the polar coordinate origin of the reference frame are above (greater than) a predetermined value, or points having vertical positions (in a z-axis direction) that are positioned higher than a predetermined position (e.g., the ground) when the reference frame is expressed in a form of sets of Cartesian coordinates. Accordingly, it is possible to narrow objects to be processed down to structures such as a building or a wall that can be expected to significantly improve a coding efficiency by the projection. Therefore, it may be possible to maintain or improve a coding efficiency while curbing a processing load and a memory amount. Alternatively, horizontal angles with respect to the polar coordinate origin of the reference frame may be sorted (quantized) into angular sections in increments of a predetermined angle, and inter reference candidate points may be limited to only representative points of the angular sections. Accordingly, it may be possible to further curb a processing load and a memory amount.

Three-dimensional data encoding device 100 and three-dimensional data decoding device 200 may rotate and/or translate the processed point cloud in a Cartesian coordinate space to calculate sets of coordinates of the processed point cloud in a Cartesian coordinate space of the current point cloud, further convert the resultant sets of coordinates of the processed point cloud into sets of coordinates in a polar coordinate space of the current point cloud, and set the resultant point cloud as the reference point cloud subjected to the motion compensation. Accordingly, it is possible to share a method of the motion compensation between encoding, using an octree or a prediction tree, a point cloud expressed in a form of sets of Cartesian coordinates and encoding a point cloud expressed in a form of sets of polar coordinates. Therefore, the three-dimensional data encoding device and the three-dimensional data decoding device can be simplified in structure, and thus it may be possible to curb scale of circuitry or software.

Computational processing in the inter prediction such as trigonometric functions and division may be simplified by using approximate operations with processing within integer prediction or using a table including a limited number of elements. By the simplification, it may be possible to improve an efficiency in point cloud encoding while curbing a processing load and a memory amount necessary for the projection.

At least one or some of the devices, the processes, and the syntax described above may be used in encoding information on vertices of a three-dimensional mesh. Accordingly, the processes can be made common to point cloud encoding and three-dimensional mesh encoding, and thus it may be possible to curb scale of circuitry or software.

As stated above, the three-dimensional data encoding device according to the present embodiment performs the processing shown in FIG. 15. The three-dimensional data encoding device corrects (motion compensates) position information of one or more first three-dimensional points to be matched to a coordinate system of a current three-dimensional point to be decoded, to generate a first reference point cloud (S201); selects one of the first reference point cloud or a second reference point cloud as a third reference point cloud for the current three-dimensional point, the second reference point cloud including the one or more first three-dimensional points uncorrected (S202); determines a prediction point using the third reference point cloud (S203); and encodes position information of the current three-dimensional point by reference to at least part of position information of the prediction point (e.g., at least part of a plurality of components included in position information) (S204).

The three-dimensional data encoding device may determine a prediction point for a current three-dimensional point from the first reference point cloud and the second reference point cloud, instead of steps S202 and S203.

Accordingly, the three-dimensional data encoding device selectively uses the first reference point cloud corrected, and the second reference point cloud uncorrected, to encode a current point. Therefore, with the three-dimensional data encoding device, it may be possible to determine a prediction point that gives a small prediction error. Therefore, the three-dimensional data encoding device can improve a coding efficiency. In addition, the three-dimensional data encoding device can curb an amount of data handled in the encoding process.

For example, in the correcting (S201), the three-dimensional data encoding device matches the position information of the one or more first three-dimensional points to a coordinate system of the current three-dimensional point, based on first information (e.g., motion information) indicating a displacement between a coordinate system of the one or more first three-dimensional points and the coordinate system of the current three-dimensional point.

For example, in the correcting (S201), the three-dimensional data encoding device projects the one or more first three-dimensional points onto a coordinate origin of the current three-dimensional point in accordance with the displacement, to derive position information of one or more second three-dimensional points included in the first reference point cloud.

For example, the first information includes at least one of second information about a movement parallel to a horizontal plane or third information about a rotation around a vertical axis.

For example, the position information of the one or more three-dimensional points includes a distance component, a horizontal angle component, and an elevation angle component, and in the correcting (S201), the three-dimensional data encoding device corrects at least one of the distance component or the horizontal angle component. Accordingly, the three-dimensional data encoding device can efficiently correct three-dimensional data obtained by a sensor in motion in a horizontal direction. That is, in this aspect, elevation angle components in sets of polar coordinates are not corrected. Therefore, this aspect is suitable for a case of selectively using the reference point cloud having a position corrected in the horizontal direction and the reference point cloud uncorrected. For example, this aspect is suitable for a three-dimensional point cloud obtained by a sensor that alternates between moving in the horizontal direction and stopping.

For example, the three-dimensional data encoding device further determines whether to perform the correcting; and generates a bitstream including the position information of the current three-dimensional point encoded and fourth information indicating whether to perform the correcting. Accordingly, the three-dimensional data encoding device can determine a prediction point that gives a small prediction error, by switching whether to perform the correction. For example, the three-dimensional data encoding device can select an appropriate technique in accordance with characteristics of a point cloud to be processed. The fourth information may be either a flag or a parameter. The fourth information may be provided for each frame, may be provided for each processing unit (e.g., slice) in a frame, or may be provided for each point.

For example, when the three-dimensional data encoding device does not perform the correcting, the three-dimensional data encoding device selects the second reference point cloud as the third reference point cloud.

For example, the one or more first three-dimensional points are included in a first processing unit (e.g., a frame or a slice), and when the three-dimensional data encoding device does not perform the correcting, the three-dimensional data encoding device selects one of the second reference point cloud or a fourth reference point cloud as the third reference point cloud, the fourth reference point cloud being one or more third three-dimensional points that are included in a second processing unit different from the first processing unit and are uncorrected. Accordingly, when the correction is not performed, the three-dimensional data encoding device can refer to two processing units (e.g., two frames) that are not subjected to the correction. Therefore, the three-dimensional data encoding device can improve a coding efficiency.

For example, one or more fourth three-dimensional points that are part of the one or more first three-dimensional points are corrected to generate the first reference point cloud. Accordingly, the three-dimensional data encoding device can reduce a processing load by limiting three-dimensional points to be corrected. For example, in a case where a relative positional relationship between a current three-dimensional point and the origin is substantially equal to a relative positional relationship between a prediction point included in the reference point cloud and the origin, a prediction error can be curbed by using the prediction point rather than performing the correction. On the other hand, in a case where a relative positional relationship between a current three-dimensional point and the origin is different from a relative positional relationship between a prediction point included in the reference point cloud and the origin, a prediction error can be curbed by using the prediction point subjected to the correction. In this manner, it is possible to make a prediction error small by switching whether to perform the correction in accordance with a position of a current three-dimensional point.

For example, the position information of the one or more three-dimensional points includes a distance component, a horizontal angle component, and an elevation angle component, and the one or more fourth three-dimensional points are one or more first three-dimensional points each having an elevation angle component greater than a predetermined value among the one or more first three-dimensional points. That is, in this aspect, three-dimensional points to be corrected are limited to three-dimensional points having large elevation angle components. Three-dimensional points having large elevation angle components express, for example, a building. Buildings are fixed to the ground. Therefore, in a case where a current three-dimensional point and a prediction point are each one of points expressing a building, a relative positional relationship between the current three-dimensional point and the origin is different from a relative positional relationship between the prediction point included in the reference point cloud and the origin. In this case, it is possible to curb a prediction error by using a prediction point subjected to the correction. For this reason, for the three-dimensional data encoding device, objects to be subjected to the correction are limited to buildings and the like.

Likewise, the one or more fourth three-dimensional points are one or more first three-dimensional points each having a vertical position higher than a predetermined position among the one or more first three-dimensional points.

For example, the three-dimensional data encoding device includes a processor and memory, and the processor performs the above-described processing using the memory.

The three-dimensional data decoding device according to the present embodiment performs the processing shown in FIG. 16. The three-dimensional data decoding device corrects (motion compensates) position information of one or more first three-dimensional points to be matched to a coordinate system of a current three-dimensional point to be decoded, to generate a first reference point cloud (S211); selects one of the first reference point cloud or a second reference point cloud as a third reference point cloud for the current three-dimensional point, the second reference point cloud including the one or more first three-dimensional points uncorrected (S212); determines a prediction point using the third reference point cloud (S213); and decodes position information of the current three-dimensional point by reference to at least part of position information of the prediction point (S214).

The three-dimensional data decoding device may determine a prediction point for a current three-dimensional point from the first reference point cloud and the second reference point cloud, instead of steps S212 and S213.

Accordingly, the three-dimensional data decoding device selectively uses the first reference point cloud corrected and the second reference point cloud uncorrected, to decode a current point. Therefore, with the three-dimensional data decoding device, it may be possible to determine a prediction point that gives a small prediction error. Therefore, the three-dimensional data decoding device can curb an amount of data handled in the decoding process.

For example, in the correcting (S211), the three-dimensional data decoding device matches the position information of the one or more first three-dimensional points to a coordinate system of the current three-dimensional point, based on first information (e.g., motion information) indicating a displacement between a coordinate system of the one or more first three-dimensional points and the coordinate system of the current three-dimensional point.

For example, in the correcting (S211), the three-dimensional data decoding device projects the one or more first three-dimensional points onto a coordinate origin of the current three-dimensional point in accordance with the displacement, to derive position information of one or more second three-dimensional points included in the first reference point cloud.

For example, the first information includes at least one of second information about a movement parallel to a horizontal plane or third information about a rotation around a vertical axis. Accordingly, the three-dimensional data decoding device can efficiently correct three-dimensional data obtained by a sensor in motion in a horizontal direction.

For example, the position information of the one or more three-dimensional points includes a distance component, a horizontal angle component, and an elevation angle component, and in the correcting (S211), the three-dimensional data decoding device corrects at least one of the distance component or the horizontal angle component. Therefore, this aspect is suitable for a case of selectively using the reference point cloud having a position corrected in the horizontal direction and the reference point cloud uncorrected. For example, this aspect is suitable for a three-dimensional point cloud obtained by a sensor that alternates between moving in the horizontal direction and stopping.

For example, the three-dimensional data decoding device further obtains, from a bitstream, fourth information indicating whether to perform the correcting; and determines whether to perform the correcting, based on the fourth information. Accordingly, the three-dimensional data decoding device can determine a prediction point that gives a small prediction error, by switching whether to perform the correction. The fourth information may be either a flag or a parameter. The fourth information may be provided for each frame, may be provided for each processing unit (e.g., slice) in a frame, or may be provided for each point.

For example, when the three-dimensional data decoding device does not perform the correcting, the three-dimensional data decoding device selects the second reference point cloud as the third reference point cloud.

For example, the one or more first three-dimensional points are included in a first processing unit (e.g., a frame or a slice), and when the three-dimensional data encoding device does not perform the correcting, the three-dimensional data decoding device selects one of the second reference point cloud or a fourth reference point cloud as the third reference point cloud, the fourth reference point cloud being one or more third three-dimensional points that are included in a second processing unit different from the first processing unit and are uncorrected. Accordingly, when the correction is not performed, the three-dimensional data decoding device can refer to two processing units (e.g., two frames) that are not subjected to the correction. Therefore, the three-dimensional data decoding device can improve a coding efficiency.

For example, one or more fourth three-dimensional points that are part of the one or more first three-dimensional points are corrected to generate the first reference point cloud. Accordingly, the three-dimensional data decoding device can reduce a processing load by limiting three-dimensional points to be corrected. For example, in a case where a relative positional relationship between a current three-dimensional point and the origin is substantially equal to a relative positional relationship between a prediction point included in the reference point cloud and the origin, a prediction error can be curbed by using the prediction point rather than performing the correction. On the other hand, in a case where a relative positional relationship between a current three-dimensional point and the origin is different from a relative positional relationship between a prediction point included in the reference point cloud and the origin, a prediction error can be curbed by using the prediction point subjected to the correction. In this manner, it is possible to make a prediction error small by switching whether to perform the correction in accordance with a position of a current three-dimensional point.

For example, the position information of the one or more three-dimensional points includes a distance component, a horizontal angle component, and an elevation angle component, and the one or more fourth three-dimensional points are one or more first three-dimensional points each having an elevation angle component greater than a predetermined value among the one or more first three-dimensional points. That is, in this aspect, three-dimensional points to be corrected are limited to three-dimensional points having large elevation angle components. Three-dimensional points having large elevation angle components express, for example, a building. Buildings are fixed to the ground.

Therefore, in a case where a current three-dimensional point and a prediction point are each one of points expressing a building, a relative positional relationship between the current three-dimensional point and the origin is different from a relative positional relationship between the prediction point included in the reference point cloud and the origin. In this case, it is possible to curb a prediction error by using a prediction point subjected to the correction. For this reason, for the three-dimensional data decoding method, objects to be subjected to the correction are limited to buildings and the like.

Likewise, the one or more fourth three-dimensional points are one or more first three-dimensional points each having a vertical position higher than a predetermined position among the one or more first three-dimensional points.

For example, the three-dimensional data decoding device includes a processor and memory, and the processor performs the above-described processing using the memory.

A three-dimensional data encoding device, a three-dimensional data decoding device, and the like according to the embodiments of the present disclosure have been described above, but the present disclosure is not limited to these embodiments.

Note that each of the processors included in the three-dimensional data encoding device, the three-dimensional data decoding device, and the like according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the structural components may be implemented as dedicated hardware or may be realized by executing a software program suited to such structural components. Alternatively, the structural components may be implemented by a program executor such as a CPU or a processor reading out and executing the software program recorded in a recording medium such as a hard disk or a semiconductor memory.

The present disclosure may also be implemented as a three-dimensional data encoding method, a three-dimensional data decoding method, or the like executed by the three-dimensional data encoding device, the three-dimensional data decoding device, and the like.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

A three-dimensional data encoding device, a three-dimensional data decoding device, and the like according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining structural components in different embodiments, without materially departing from the spirit of the present disclosure.

[Industrial Applicability]

The present disclosure is applicable to a three-dimensional data encoding device and a three-dimensional data decoding device.

[Reference Signs List]

| | |
|---|---|
| 100 | three-dimensional data encoding device |
| 101 | encoder |
| 102, 202 | motion compensator |
| 103, 203 | first buffer |
| 104, 204 | second buffer |
| 105, 205 | switcher |
| 106, 206 | inter predictor |
| 200 | three-dimensional data decoding device |

201         decoder

**Claims**

1. A three-dimensional data encoding method comprising:

   correcting position information of one or more first three-dimensional points to be matched to a coordinate system of a current three-dimensional point to be encoded, to generate a first reference point cloud;
   selecting one of the first reference point cloud or a second reference point cloud as a third reference point cloud for the current three-dimensional point, the second reference point cloud including the one or more first three-dimensional points uncorrected;
   determining a prediction point using the third reference point cloud; and
   encoding position information of the current three-dimensional point by reference to at least part of position information of the prediction point.

2. The three-dimensional data encoding method according to claim 1,
   wherein in the correcting, the position information of the one or more first three-dimensional points is matched to a coordinate system of the current three-dimensional point, based on first information indicating a displacement between a coordinate system of the one or more first three-dimensional points and the coordinate system of the current three-dimensional point.

3. The three-dimensional data encoding method according to claim 2,
   wherein in the correcting, the one or more first three-dimensional points are projected onto a coordinate origin of the current three-dimensional point in accordance with the displacement, to derive position information of one or more second three-dimensional points included in the first reference point cloud.

4. The three-dimensional data encoding method according to claim 2,
   wherein the first information includes at least one of second information about a movement parallel to a horizontal plane or third information about a rotation around a vertical axis.

5. The three-dimensional data encoding method according to claim 1,

   wherein the position information of the one or more three-dimensional points includes a distance component, a horizontal angle component, and an elevation angle component, and
   in the correcting, at least one of the distance component or the horizontal angle component is corrected.

6. The three-dimensional data encoding method according to claim 1, further comprising:

   determining whether to perform the correcting; and
   generating a bitstream including the position information of the current three-dimensional point encoded and fourth information indicating whether to perform the correcting.

7. The three-dimensional data encoding method according to claim 6,
   wherein when the correcting is not performed, the second reference point cloud is selected as the third reference point cloud.

8. The three-dimensional data encoding method according to claim 6,

   wherein the one or more first three-dimensional points are included in a first processing unit, and
   when the correcting is not performed, one of the second reference point cloud or a fourth reference point cloud is selected as the third reference point cloud, the fourth reference point cloud being one or more third three-dimensional points that are included in a second processing unit different from the first processing unit and are uncorrected.

9. The three-dimensional data encoding method according to claim 1,
   wherein one or more fourth three-dimensional points that are part of the one or more first three-dimensional points are corrected to generate the first reference point cloud.

**10.** The three-dimensional data encoding method according to claim 9,

wherein the position information of the one or more three-dimensional points includes a distance component, a horizontal angle component, and an elevation angle component, and

the one or more fourth three-dimensional points are one or more first three-dimensional points each having an elevation angle component greater than a predetermined value among the one or more first three-dimensional points.

**11.** The three-dimensional data encoding method according to claim 9,

the one or more fourth three-dimensional points are one or more first three-dimensional points each having a vertical position higher than a predetermined position among the one or more first three-dimensional points.

**12.** A three-dimensional data decoding method comprising:

correcting position information of one or more first three-dimensional points to be matched to a coordinate system of a current three-dimensional point to be decoded, to generate a first reference point cloud;

selecting one of the first reference point cloud or a second reference point cloud as a third reference point cloud for the current three-dimensional point, the second reference point cloud including the one or more first three-dimensional points uncorrected;

determining a prediction point using the third reference point cloud; and

decoding position information of the current three-dimensional point by reference to at least part of position information of the prediction point.

**13.** The three-dimensional data decoding method according to claim 12,

wherein in the correcting, the position information of the one or more first three-dimensional points is matched to a coordinate system of the current three-dimensional point, based on first information indicating a displacement between a coordinate system of the one or more first three-dimensional points and the coordinate system of the current three-dimensional point.

**14.** The three-dimensional data decoding method according to claim 13,

wherein in the correcting, the one or more first three-dimensional points are projected onto a coordinate origin of the current three-dimensional point in accordance with the displacement, to derive position information of one or more second three-dimensional points included in the first reference point cloud.

**15.** The three-dimensional data decoding method according to claim 13,

wherein the first information includes at least one of second information about a movement parallel to a horizontal plane or third information about a rotation around a vertical axis.

**16.** The three-dimensional data decoding method according to claim 12,

wherein the position information of the one or more three-dimensional points includes a distance component, a horizontal angle component, and an elevation angle component, and

in the correcting, at least one of the distance component or the horizontal angle component is corrected.

**17.** The three-dimensional data decoding method according to claim 12, further comprising:

obtaining, from a bitstream, fourth information indicating whether to perform the correcting; and

determining whether to perform the correcting, based on the fourth information.

**18.** The three-dimensional data decoding method according to claim 17,

wherein when the correcting is not performed, the second reference point cloud is selected as the third reference point cloud.

**19.** The three-dimensional data decoding method according to claim 17,

wherein the one or more first three-dimensional points are included in a first processing unit, and

when the correcting is not performed, one of the second reference point cloud or a fourth reference point cloud is selected as the third reference point cloud, the fourth reference point cloud being one or more third three-dimensional points that are included in a second processing unit different from the first processing unit and are uncorrected.

20. The three-dimensional data decoding method according to claim 12,
wherein one or more fourth three-dimensional points that are part of the one or more first three-dimensional points are corrected to generate the first reference point cloud.

21. The three-dimensional data decoding method according to claim 20,

wherein the position information of the one or more three-dimensional points includes a distance component, a horizontal angle component, and an elevation angle component, and
the one or more fourth three-dimensional points are one or more first three-dimensional points each having an elevation angle component greater than a predetermined value among the one or more first three-dimensional points.

22. The three-dimensional data decoding method according to claim 20,
the one or more fourth three-dimensional points are one or more first three-dimensional points each having a vertical position higher than a predetermined position among the one or more first three-dimensional points.

23. A three-dimensional data encoding device comprising:

a processor; and
memory,
wherein using the memory, the processor:

corrects position information of one or more first three-dimensional points to be matched to a coordinate system of a current three-dimensional point to be encoded, to generate a first reference point cloud;
selects one of the first reference point cloud or a second reference point cloud as a third reference point cloud for the current three-dimensional point, the second reference point cloud including the one or more first three-dimensional points uncorrected;
determines a prediction point using the third reference point cloud; and
encodes position information of the current three-dimensional point by reference to at least part of position information of the prediction point.

24. A three-dimensional data decoding device comprising:

a processor; and
memory,
wherein using the memory, the processor:

corrects position information of one or more first three-dimensional points to be matched to a coordinate system of a current three-dimensional point to be decoded, to generate a first reference point cloud;
selects one of the first reference point cloud or a second reference point cloud as a third reference point cloud for the current three-dimensional point, the second reference point cloud including the one or more first three-dimensional points uncorrected;
determines a prediction point using the third reference point cloud; and
decodes position information of the current three-dimensional point by reference to at least part of position information of the prediction point.

# FIG. 1

# FIG. 2

# FIG. 3

# FIG. 4

# FIG. 5

Start

Determine reference point for inter prediction — S13801

Determine angle as reference for selection of inter reference point candidate — S13802

Select inter reference point candidate — S13803

Derive angle in encoding target frame of inter reference point candidate — S13804

Select inter reference point — S13805

Derive prediction value — S13806

End

# FIG. 6

# FIG. 7

| Index | Range of $\varphi_{cur}$ | Value of $d_{pred}$ |
|---|---|---|
| 0 | $-\alpha \leq \varphi_{cur} \leq \alpha$ | $\left(d_{ref1}(k)\cos\left(\varphi_{ref1}(k)\right) - m\right)/\cos(\varphi_{cur})$ |
| 1 | $\alpha < \varphi_{cur} < \pi - \alpha$ | $d_{ref1}(k)\sin\left(\varphi_{ref1}(k)\right)/\sin(\varphi_{cur})$ |
| 2 | $\pi - \alpha \leq \varphi_{cur} \; or \; \varphi_{cur} \leq -\pi + \alpha$ | $\left(d_{ref1}(k)\cos\left(\varphi_{ref1}(k)\right) - m\right)/\cos(\varphi_{cur})$ |
| 3 | $-\pi + \alpha < \varphi_{cur} < -\alpha$ | $d_{ref1}(k)\sin\left(\varphi_{ref1}(k)\right)/\sin(\varphi_{cur})$ |

# FIG. 8

# FIG. 9

| Index | Range of $\varphi_{cur}$ | Value of $d_{pred}$ |
|---|---|---|
| 0 | $-\alpha \leq \varphi_{cur} \leq \alpha$ | $\left(d_{ref1}(k)\cos\left(\varphi_{ref1}(k)\right) - m\right)/\cos(\varphi_{cur})$ |
| 1 | $\alpha < \varphi_{cur} < \dfrac{\pi}{2} - \beta$ | $\dfrac{d_{ref1}(k)\left(\sin\left(\varphi_{ref1}(k)\right) + \cos\left(\varphi_{ref1}(k)\right)\right) - m}{\sin(\varphi_{cur}) + \cos((\varphi_{cur}))}$ |
| 2 | $\dfrac{\pi}{2} - \beta \leq \varphi_{cur} \leq \dfrac{\pi}{2} + \beta$ | $d_{ref1}(k)\sin\left(\varphi_{ref1}(k)\right)/\sin(\varphi_{cur})$ |
| 3 | $\dfrac{\pi}{2} + \beta < \varphi_{cur} < \pi - \alpha$ | $\dfrac{d_{ref1}(k)\left(\sin\left(\varphi_{ref1}(k)\right) - \cos\left(\varphi_{ref1}(k)\right)\right) + m}{\sin(\varphi_{cur}) - \cos((\varphi_{cur}))}$ |
| 4 | $\pi - \alpha \leq \varphi_{cur}\ or\ \varphi_{cur} \leq -\pi + \alpha$ | $\left(d_{ref1}(k)\cos\left(\varphi_{ref1}(k)\right) - m\right)/\cos(\varphi_{cur})$ |
| 5 | $-\pi + \alpha < \varphi_{cur} < -\dfrac{\pi}{2} - \beta$ | $\dfrac{d_{ref1}(k)\left(\sin\left(\varphi_{ref1}(k)\right) + \cos\left(\varphi_{ref1}(k)\right)\right) - m}{\sin(\varphi_{cur}) + \cos((\varphi_{cur}))}$ |
| 6 | $-\dfrac{\pi}{2} - \beta \leq \varphi_{cur} \leq -\dfrac{\pi}{2} + \beta$ | $d_{ref1}(k)\sin\left(\varphi_{ref1}(k)\right)/\sin(\varphi_{cur})$ |
| 7 | $-\dfrac{\pi}{2} + \beta < \varphi_{cur} < -\alpha$ | $\dfrac{d_{ref1}(k)\left(\sin\left(\varphi_{ref1}(k)\right) - \cos\left(\varphi_{ref1}(k)\right)\right) + m}{\sin(\varphi_{cur}) - \cos((\varphi_{cur}))}$ |

# FIG. 10

100

Point cloud to be encoded → Encoder 101 → Bitstream

Inter prediction point ← Inter predictor 106

Motion compensator 102

Decoded point (polar coordinates)

Inter reference point

105

First buffer 103

Reference point cloud subjected to motion compensation

Second buffer 104

Reference point cloud not subjected to motion compensation

# FIG. 11

200

Bitstream → Decoder 201 → Decoded point cloud

Inter prediction point ← Inter predictor 206

Motion compensator 202

Decoded point (polar coordinates)

Inter reference point

205

First buffer 203

Reference point cloud subjected to motion compensation

Second buffer 204

Reference point cloud not subjected to motion compensation

# FIG. 12

```
                    ┌─────────────┐
                    │    Start    │
                    └─────────────┘
                           │
                           ▼              ╱S101
┌──────────────────────────────────────────────┐
│ Obtain motion information about displacement   │
│ between coordinates of processed point cloud   │
│  and coordinates of current point cloud        │
└──────────────────────────────────────────────┘
                           │
                           ▼              ╱S102
┌──────────────────────────────────────────────┐
│    Project first processed point cloud onto    │
│     coordinates of current point cloud in      │
│  accordance with motion information and set    │
│  resultant point cloud as first reference point│
│                   cloud                        │
└──────────────────────────────────────────────┘
                           │
                           ▼              ╱S103
┌──────────────────────────────────────────────┐
│      Set second processed point cloud          │
│      as second reference point cloud           │
└──────────────────────────────────────────────┘
                           │
                           ▼              ╱S104
╭──────────────────────────────────────────────╮
│   Loop process for each current point in       │
│       current point cloud (start)              │
╰──────────────────────────────────────────────╯
                           │
                           ▼              ╱S105
┌──────────────────────────────────────────────┐
│ Determine inter prediction point corresponding │
│ to current point by reference to reference point│
│  cloud including first reference point cloud and│
│        second reference point cloud            │
└──────────────────────────────────────────────┘
                           │
                           ▼              ╱S106
┌──────────────────────────────────────────────┐
│       Encode/decode current point by           │
│   reference to inter prediction point          │
└──────────────────────────────────────────────┘
                           │
                           ▼              ╱S107
╭──────────────────────────────────────────────╮
│      Loop process for each current             │
│   point in current point cloud (end)           │
╰──────────────────────────────────────────────╯
                           │
                           ▼
                    ┌─────────────┐
                    │     End     │
                    └─────────────┘
```

# FIG. 13

Distance $d_{ref2}(n)$

Inter reference point

Polar
coordinate
origin of
current frame

Horizontal angle $\varphi_{ref2}(n)$

Horizontal-angle
reference direction
in current frame

α

Distance $d_{ref1}(n)$

Motion
vector mv

Polar coordinate
origin of
reference frame

Horizontal angle $\varphi_{ref1}(n)$

Horizontal-angle reference
direction in reference frame

β

α

Direction parallel to
horizontal-angle reference
direction in current frame

# FIG. 14

Start

S121

$$\varphi'_{ref1}(n) = \varphi_{ref1}(n) - \alpha + \beta$$

S122

$$d_{ref1}(n)\cos(\varphi'_{ref1}(n)) + |mv| > 0$$

True → S123 Execute Equation 5

False ↓

S124

$$d_{ref1}(n)\cos(\varphi'_{ref1}(n)) + |mv| < 0$$

True → S125 Execute Equation 6

False ↓

S126

$$\sin(\varphi'_{ref1}(n)) \neq 0$$

True → S127 Execute Equation 7

False ↓ S128 Execute Equation 8

S129

$$\varphi_{ref2}(n) = \varphi'_{ref2}(n) + \alpha$$

S130

$$\sin(\varphi'_{ref2}(n)) \neq 0$$

True → S131 Execute Equation 9

False ↓ S132 Execute Equation 10

End

# FIG. 15

Start

S201

Correct position information of first three-dimensional points to be matched to coordinate system of current three-dimensional point, to generate first reference point cloud

S202

Select one of first reference point cloud and second reference point cloud including first three-dimensional points uncorrected as third reference point cloud for current three-dimensional point

S203

Determine prediction point using third reference point cloud

S204

Encode position information of current three-dimensional point by reference to position information of prediction point

End

# FIG. 16

Start

S211

Correct position information of first three-dimensional points to be matched to coordinate system of current three-dimensional point, to generate first reference point cloud

S212

Select one of first reference point cloud and second reference point cloud including first three-dimensional points uncorrected as third reference point cloud for current three-dimensional point

S213

Determine prediction point using third reference point cloud

S214

Decode position information of current three-dimensional point by reference to position information of prediction point

End

## INTERNATIONAL SEARCH REPORT

| International application No. |
|---|
| **PCT/JP2022/039448** |

**A. CLASSIFICATION OF SUBJECT MATTER**

*G06T 9/00*(2006.01)i
FI: G06T9/00

According to International Patent Classification (IPC) or to both national classification and IPC

**B. FIELDS SEARCHED**

Minimum documentation searched (classification system followed by classification symbols)

G06T9/00, H04N19/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2021/0099711 A1 (APPLE INC.) 01 April 2021 (2021-04-01)<br>paragraphs [0055]-[0073] | 1-24 |
| A | US 2017/0347120 A1 (MICROSOFT TECHNOLOGY LICENSING, LLC) 30 November 2017 (2017-11-30)<br>paragraphs [0123]-[0142] | 1-24 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/039448**

| Patent document cited in search report | | | Publication date (day/month/year) | Patent family member(s) | | | Publication date (day/month/year) |
|---|---|---|---|---|---|---|---|
| US | 2021/0099711 | A1 | 01 April 2021 | (Family: none) | | | |
| US | 2017/0347120 | A1 | 30 November 2017 | CN | 109196559 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014020663 A